# EUROPEAN PATENT APPLICATION

(11) **EP 4 800 173 A1**
(43) Date of publication of application: **02.09.2026**
(21) Application number: 24958681.9
(22) Date of filing: 21.10.2024
(51) Int. Cl.: D06F 37/30, D06F 37/20, D06F 37/22, D06F 37/40, H02K 7/116, H02K 21/22

(54) **DRUM-ROTATING DEVICE AND CLOTHING TREATMENT APPARATUS COMPRISING SAME**

(71) Applicant: LG Electronics Inc., Yeongdeungpo-gu Seoul 07336 (KR)
(72) Inventor: OH, Pil Seung, Seoul 08592 (KR); NAM, Hyoung Uk, Seoul 08592 (KR)
(74) Representative: Vossius & Partner Patentanwälte Rechtsanwälte mbB
(86) International application number: PCT/KR2024/016009
(87) International publication number: WO 2026/089071

(57) **Abstract**

Proposed are a drum rotation device (100) and a laundry treating apparatus including the drum rotation device. The drum rotation device (100) includes a clutch (410) and a clutch driving device (400) configured to drive the clutch (410). The clutch driving device (400) includes a driving member (450) having a rotational center concentric with a motor shaft (340) and rotated by a driving source (441). In this case, a pusher (460), which moves in the axial direction in conjunction with the rotation of the driving member (450), moves the clutch (410) in the axial direction. Accordingly, when the clutch driving device (400) is arranged to have the rotational center concentric with the motor shaft (340), the radial dimension of the drum rotation device (100) is prevented from increasing due to the clutch driving device (400).

## Description

### Technical Field

The present disclosure relates to a drum rotation device and a laundry treating apparatus including the same.

### Background Art

Generally, a laundry treating apparatus refers to an apparatus for washing laundry or for drying washed laundry. The laundry treating apparatus includes a washing machine and a dryer. Among them, the washing machine may wash laundry such as clothes and bedding by performing washing, rinsing, and spin-drying processes so as to remove contaminants attached to the laundry.

In recent years, various types of washing machines have been commercialized. For example, there are vertical washing machines in which a drum accommodating laundry rotates along a vertical axis, and drum-type washing machines in which a drum rotates about a horizontal or inclined axis. These washing machines are all driven by a motor.

A drum-type washing machine may rotate a drum containing laundry to perform a series of washing processes, including washing, rinsing, and spin-drying. During the washing and rinsing processes, which involve spinning laundry containing a large amount of water, a low-speed, hightorque rotational force is required. Conversely, in the spin-drying process, which spins laundry until it contains almost no water, a high-speed, low-torque rotational force is required.

Thus, a drum driving device for driving a washing machine needs to provide various rotational forces and rotational speeds according to a driving mode. To this end, a reducer and a clutch are employed in the drum driving device. For example, as disclosed in Korean Patent Application Publication No. 10-2020-0089604 (Prior Art 1), Korean Patent Application Publication No. 10-2023-0090484 (Prior Art 2), and Korean Patent No. 10-1920812 (Prior Art 3), techniques are disclosed in which a plurality of gears, such as a planetary gear assembly, are installed between a motor and an output shaft to reduce the speed of the motor. The clutch controls the driving of some of the plurality of gears among the plurality of gears, thereby changing the torque and rotational speed of the output shaft coupled to a rotating shaft of a rotating tub.

However, as seen in the structures of the above prior arts, a clutch power part (actuator) for driving the clutch is also installed inside the drum driving device. The clutch power part is arranged at a position radially offset from the center of the drum driving device in order to secure an installation space. For example, the clutch power part is disposed radially outward from the inner circumferential surface of a stator of the motor. Accordingly, due to a space required for installing the clutch power part, there arises a problem in that the overall volume of the drum driving device increases.

In addition, in a conventional drum rotation device, clutch power parts are spaced apart from a coupler, and thus a structure such as a lever is required to transmit power therebetween. The conventional clutch power part has a structure in which the lever rotates to rectilinearly move the coupler. However, this structure has a disadvantage in that the driving direction of the lever and the driving direction of the coupler are different, and thus a large torque is required to drive the coupler, and thus the driving efficiency is reduced. Furthermore, since the driving directions of the clutch power part and the coupler differ, there is a problem in that the operational reliability of the coupler is lowered.

Furthermore, when a power transmission path by the clutch power part becomes longer, a structure for transmitting the power of the clutch power part to the coupler becomes complicated, and the number of components increases. In addition, when the number of components increases, the durability of the clutch power part is also reduced.

In addition, since the clutch power part is separately installed at a position spaced apart from a motor and gears, there is a problem in that the assembly efficiency and space utilization of the drum rotation device are reduced.

Furthermore, in the conventional drum rotation device, in addition to the structure for mounting the motor and the gears to the drum rotation device, a structure for mounting the clutch power part to the drum rotation device is also required. Accordingly, the conventional drum rotation device has a disadvantage in that the number of components for mounting parts and the number of assembly processes increase.

### Disclosure

### Technical Problem

The present disclosure is intended to solve the problems of the prior arts as described above, and an objective of the present disclosure is to reduce the overall diameter of a drum rotation device by aligning a clutch driving device in the axial direction of the drum rotation device.

Another objective of the present disclosure is to allow the driving direction of a pusher, which constitutes the clutch driving device, to be the same as the driving direction of the clutch.

Another objective of the present disclosure is to dualize the clutch driving device such that the pusher, which constitutes the clutch driving device, performs only rectilinear motion in the axial direction, while a driving member which operates the pusher performs only rotational motion about a motor shaft.

Another objective of the present disclosure is to allow a motor to be mounted to a gear assembly (a gear housing) via the clutch driving device without a separate fixing device for fixing the motor.

### Technical Solution

According to an aspect of the present disclosure for achieving the above-mentioned objectives, a drum rotation device of the present disclosure may include a clutch and a clutch driving device configured to drive the clutch. The clutch driving device may include a driving member having a rotational center concentric with a motor shaft and rotated by a driving source. In this case, a pusher, which moves in the axial direction in conjunction with the rotation of the driving member, may move the clutch in the axial direction. Accordingly, when the clutch driving device is arranged to have the rotational center concentric with the motor shaft, the radial dimension of the drum rotation device may be prevented from increasing due to the clutch driving device.

In addition, the drum rotation device of the present disclosure may include an output shaft coupled to a drum, and a motor including a stator and a rotor configured to rotate relative to the stator. The drum rotation device may include a gear assembly that transmits rotational force of the rotor to the output shaft, and the gear assembly may include the motor shaft connected to the motor. The drum rotation device may include the clutch that moves in the axial direction of the motor shaft to be connected to the rotor, and the clutch driving device that moves the clutch in the axial direction. Accordingly, since the pusher of the clutch driving device moves in the same axial direction as the movement direction of the clutch, it may not be necessary to transmit the rotational force of the driving source (the motor) to the pusher along a radial direction. Accordingly, a structure for power transmission of the clutch driving device may be simplified.

Furthermore, the driving member may be disposed in the clutch driving device such that the axial movement thereof is restricted. The pusher may be disposed in the clutch driving device such that relative rotation thereof with respect to the driving member is restricted. In this case, since the driving member does not need to move rectilinearly, a gear shape for interlocking with the driving source and a cam shape for moving the pusher may be simply implemented.

In addition, the driving member and the pusher may be arranged concentrically with each other. In this way, since the clutch driving device does not increase the radial dimension of the drum rotation device, the clutch driving device according to the present disclosure may be applied to a drum rotation device of a small size.

Furthermore, each of the driving member and the pusher may be disposed to surround the motor shaft.

In addition, the driving member may be arranged closer to the motor than the pusher in the axial direction. The driving member may move the pusher away from the motor in the axial direction.

Furthermore, each of the driving member and the pusher may be disposed to surround the motor shaft. The driving member and the pusher may overlap each other in a radial direction. Through this overlapping structure, the axial length of the clutch driving device may be further reduced, thereby also reducing the axial length of the drum rotation device.

In addition, the clutch, the driving member, and the pusher may be disposed to overlap each other in the radial direction. The driving member and the pusher may be concentrically arranged to surround the motor shaft. The pusher may be guided by an outer circumferential surface of the driving member and may be moved in the axial direction.

Furthermore, the stator and the gear assembly may be spaced apart from each other in the axial direction. The clutch driving device may be disposed between the stator and the gear assembly in the axial direction. The clutch driving device may be coupled to each of the stator and the gear assembly. Accordingly, the motor may be coupled to the gear assembly via the clutch driving device, and a separate structure for fixing the motor may be omitted. Accordingly, the number of components for fixing the motor may be reduced, and since the motor is fixed during the mounting process of the clutch driving device, the assembly work may also be reduced.

In addition, a diameter of the clutch driving device may be smaller than a diameter of the gear assembly and a diameter of the motor.

Furthermore, one of the driving member and the pusher may be provided with a guide cam portion having a length in the axial direction that varies in a circumferential direction thereof. A remaining one of the driving member and the pusher may be provided with a lifting guide part that is guided by the guide cam portion. When the driving member rotates, the lifting guide part may move in the axial direction on the guide cam portion.

In addition, the driving member may be provided with a driving cam having a length in the axial direction that varies along a circumferential direction of the driving member. The pusher may be provided with a driven cam that is guided by the driving cam and has a length in the axial direction that varies along a circumferential direction of the pusher. When the driving member rotates, the driven cam may move in the axial direction along the driving cam. Through this structure, the driving cam and the driven cam may be in surface contact with each other and convert the rotational motion of the driving member into the rectilinear motion of the pusher. Accordingly, not only can the operational reliability of the clutch driving device be improved, but a load on the driving source may be reduced by the inclination angle of the cam structure.

Furthermore, the driving cam may have a pushing drive portion having a first inclination angle relative to the circumferential direction of the driving member. The driven cam may have a release drive portion having the same inclination angle as the first inclination angle relative to the circumferential direction of the pusher. The pushing drive portion and the release drive portion may be provided to face each other.

In addition, the gear assembly may include a gear housing having a mounting space formed therein, and a plurality of gears disposed in the mounting space and operating in conjunction with the rotation of the motor shaft. In this case, the clutch driving device may be fixed to the gear housing while surrounding the motor shaft.

Furthermore, the clutch driving device may include a drive casing in which an operating space is formed and the driving source is disposed. The driving member may be disposed in the operating space and may be rotated by receiving rotational force from the driving source. At least a portion of the pusher may be disposed in the operating space and may move in the axial direction.

In addition, a portion of the pusher may move into and out of the operating space along the axial direction.

Furthermore, the drive casing may be provided with a rotation-preventing portion that interferes with the pusher in the circumferential direction of the pusher. The rotation-preventing portion may be continuously formed along the moving direction of the pusher.

In addition, a rotation-preventing recess recessed in the radial direction may be formed in the drive casing. The pusher may be provided with an anti-rotation protrusion part protruding in the radial direction and inserted into the rotation-preventing recess. The rotation-preventing recess may extend along the moving direction of the pusher.

Furthermore, a pusher movement hole through which the pusher moves into and out of the drive casing may be open in the drive casing. A radius of the pusher movement hole may be smaller than a radial distance between a center of the pusher and an end of the anti-rotation protrusion part.

In addition, the driving source may be disposed to be spaced apart from each of the driving member and the pusher in a radial direction of the clutch driving device. A radial distance between the rotational center of the driving member and the driving source may be shorter than a radial distance between a rotational center of the gear assembly and a radial end of the gear assembly. The radial distance between the rotational center of the driving member and the driving source may be shorter than a radial distance between a rotational center of the motor and an edge of the motor.

Furthermore, the driving member may include a ring-shaped drive body, and a driving gear provided on a surface of the drive body along a circumferential direction of the drive body and configured to be engaged with the driving source to rotate. In this case, the driving cam may be provided on the surface of the drive body along the circumferential direction of the driving member, wherein the axial distance of the driving cam may vary along the circumferential direction. Accordingly, while the driving member continuously rotates in a single direction, the driving member may move the pusher upward and downward. Thus, the driving source for operating the driving member may also be rotated in only one direction, whereby the operating mechanism of the clutch driving device may be implemented in a simplified manner.

In addition, the driving gear and the driving cam may respectively be provided on different surfaces of the drive body, and
a radial distance between the rotational center of the driving member and the driving gear may be greater than a radial distance between the rotational center of the driving member and the driving cam.

In addition, the driving member may have a guide fence provided along the circumferential direction of the driving member. The driving cam having a distance in the axial direction that varies along a circumferential direction of the guide fence may be provided on a surface of the guide fence. The pusher may be disposed to surround the guide fence. The driven cam corresponding to the driving cam may be provided on an outer circumferential surface of the pusher facing the guide fence.

Furthermore, the pusher and the clutch may respectively have a pushing surface and a contact support portion formed to face each other in the axial direction. The pushing surface and the contact support portion may be maintained in surface contact with each other.

In addition, an elastic member tensioned in the axial direction may be provided between the gear assembly and the clutch. The elastic member may provide an elastic force in the axial direction to the clutch. In this manner, in the present disclosure, the pusher may also be returned to its original position by using the existing spring (the elastic member) that moves the clutch. Accordingly, the clutch driving device may not be required to have a separate spring, thereby reducing the number of components and assembly time.

Furthermore, The driving cam may include a first cam portion having a length in the axial direction that increases or decreases along the circumferential direction of the driving member, and a second cam portion connected to the first cam portion and having an inclination angle smaller than an inclination angle of the first cam portion relative to the circumferential direction of the driving member.

In addition, a sensing fence may be provided on an edge of the driving member along the circumferential direction of the driving member. A sensing avoidance portion in which the sensing fence is omitted may be formed on the edge of the driving member along the circumferential direction of the driving member. During rotation of the driving member, the sensing fence may interfere with a sensing switch to turn the sensing switch on or off, and during rotation of the driving member, the sensing avoidance portion may turn the sensing switch off or on. In this manner, the present disclosure may implement a mechanical sensing structure that operates the sensing switch by utilizing the rotation of the driving member, thereby enhancing the control reliability of the clutch driving device.

Furthermore, the driving member may be provided with the driving cam extending along a circumferential direction of the driving member. The sensing fence may be provided on the edge of the driving member along the circumferential direction of the driving member. In the driving member, the driving cam and the sensing fence may be provided in equal numbers.

In addition, at least one surface of a surface of the driving member and a surface of the pusher facing the driving member may be provided with a cam portion that interferes with a counterpart in a circumferential direction.

### Advantageous Effects

As described above, a drum rotation device and a laundry treating apparatus including the drum rotation device according to the present disclosure may have the following effects.

According to the present disclosure, the driving member and the pusher, which constitute the clutch driving device, may be aligned in the axial direction of the drum rotation device. When the clutch driving device is thus aligned in the axial direction of the drum rotation device, an increase in the radial dimension of the drum rotation device due to the clutch driving device may be prevented, thereby allowing the drum rotation device and the laundry treating apparatus to be downsized.

In addition, since the clutch driving device does not increase the radial dimension of the drum rotation device, the clutch driving device of the present disclosure may be applied to a drum rotation device of a small size. Accordingly, the clutch driving device according to the present disclosure may not only have improved compatibility but also allow the drum rotation device to be downsized.

In particular, the driving member and the pusher of the clutch driving device may be arranged concentrically with respect to their respective driving shafts and may overlap each other in the radial direction. In this case, the axial size of the clutch driving device may be reduced, and both the clutch driving device and the drum rotation device may be downsized.

In addition, according to the present disclosure, the pusher, which constitutes the clutch driving device, may move in the axial direction to move the clutch axially, thereby separating the clutch from a coupler or coupling the clutch with the coupler. Since the pusher of the clutch driving device moves in the same axial direction as the moving direction of the clutch, it is not necessary to transmit the rotational force of the driving source (the motor) to the pusher in the radial direction. Accordingly, the structure for power transmission in the clutch driving device may be simplified, and power may be transmitted more directly, thereby improving power transmission efficiency.

In particular, according to the present disclosure, a power transmission structure such as a lever arranged radially between the clutch and the driving source, and a separate spring for returning the lever may be omitted, and the driving member, which is arranged concentrically with the motor shaft, may rotate to move the pusher. Accordingly, a load on the driving source (the motor) for driving the clutch driving device may be reduced, and a small-sized motor may be applied to the clutch driving device.

Furthermore, according to the present disclosure, the clutch driving device may be dualized so that the pusher constituting the clutch driving device performs only rectilinear motion in the axial direction, while the driving member for operating the pusher performs only rotational motion about the drive shaft. In this case, since the driving member does not need to move rectilinearly, a gear shape for engagement with the driving source and a cam shape for moving the pusher may be implemented in a simplified manner. Accordingly, the durability of the driving member may be improved, and the operational reliability of both the driving member and the pusher may also be enhanced.

In addition, according to the present disclosure, the pusher may also be returned to its original position by using the existing spring (the elastic member) that moves the clutch. Accordingly, the clutch driving device may not be required to have a separate spring, thereby reducing the number of components and assembly time.

Furthermore, according to the present disclosure, the clutch driving device may be disposed between the motor and the gear assembly (a reducer) in the axial direction, and may be coupled to each of the motor and the gear assembly. The motor may be coupled to the gear assembly via the clutch driving device, and a separate structure for fixing the motor may be omitted. Accordingly, the number of components for fixing the motor may be reduced, and the motor may be fixed during the mounting process of the clutch driving device, thereby reducing assembly time.

In addition, according to the present disclosure, since the driving cam is provided on the driving member along the circumferential direction, the pusher may be moved up and down while the driving member is continuously rotated in one direction. Accordingly, the driving source for operating the driving member may also rotate only in one direction, and thus the operating mechanism of the clutch driving device may be implemented in a simplified manner.

Furthermore, according to the present disclosure, the driving member and the pusher constituting the drum rotation device may be provided with corresponding cam structures (a driving cam part and a driven cam part), and the cam structures may be in surface contact with each other and convert the rotational motion of the driving member into the rectilinear motion of the pusher. Accordingly, the operational reliability of the clutch driving device may be improved, and a load on the driving source may be reduced through the inclination angle of the cam structure.

In addition, according to the present disclosure, the clutch, the driving member, and the pusher may be radially overlapped with each other. This may further reduce the axial length of the clutch driving device, thereby reducing the axial length of the laundry treating apparatus as well.

Furthermore, according to the present disclosure, during the rotation of the driving member, the sensing switch may be turned on or off. When the sensing switch operates in conjunction with the rotation of the driving member, a controller may detect the rotational angle of the driving member and control the driving member. Accordingly, according to the present disclosure, a mechanical sensing structure that operates the sensing switch by using the rotation of the driving member may be implemented, thereby improving the control reliability of the clutch driving device.

### Description of Drawings

FIG. 1 is a perspective view illustrating a structure of a laundry treating apparatus to which a drum rotation device is applied according to a first embodiment of the present disclosure.
FIG. 2 is a perspective view illustrating a structure of a casing and a tub that constitute the laundry treating apparatus according to the first embodiment of the present disclosure.
FIG. 3 is a perspective view illustrating a rear structure of the laundry treating apparatus to which the first embodiment of the drum rotation device according to the present disclosure is applied.
FIG. 4 is a perspective view illustrating the first embodiment of the drum rotation device according to the present disclosure.
FIG. 5 is a cross-sectional view taken along line V-V' of FIG. 4.
FIG. 6 is an enlarged cross-sectional view illustrating an internal structure of the drum rotation device according to the first embodiment of the present disclosure.
FIG. 7 is a cross-sectional view illustrating a coupler, which constitutes the drum rotation device according to the first embodiment of the present disclosure, connected to a rotor.
FIG. 8 is a cross-sectional view illustrating a state in which a clutch, which constitutes the drum rotation device according to the first embodiment of the present disclosure, separates the coupler from the rotor.
FIG. 9 is an exploded perspective view illustrating components which constitute the drum rotation device according to the first embodiment of the present disclosure.
FIG. 10 is an exploded perspective view illustrating components, which constitute the drum rotation device according to the first embodiment of the present disclosure, shown from an angle different from that of FIG. 9.
FIG. 11 is a perspective view illustrating structures of a bearing housing, a motor, the coupler, and a clutch driving device constituting the drum rotation device according to the first embodiment of the present disclosure.
FIG. 12 is a perspective view illustrating a state in which the clutch driving device is coupled to the motor constituting the drum rotation device according to the first embodiment of the present disclosure.
FIG. 13 is an exploded perspective view illustrating components of the clutch driving device constituting the drum rotation device according to the first embodiment of the present disclosure.
FIG. 14 is an exploded perspective view illustrating components of the clutch driving device, which constitute the drum rotation device according to the first embodiment of the present disclosure, shown from an angle different from that of FIG. 13.
FIG. 15 is a perspective view illustrating the structure of the clutch driving device constituting the drum rotation device according to the first embodiment of the present disclosure.
FIG. 16 is a perspective view illustrating the clutch driving device with a second casing removed according to the first embodiment of the present disclosure, shown from an angle different from that of FIG. 15.
FIG. 17 is a perspective view illustrating a state in which a first casing of the clutch driving device according to the first embodiment of the present disclosure is removed.
FIG. 18 is a perspective view illustrating a state in which the coupler, a driving member, and a pusher constituting the drum rotation device according to the first embodiment of the present disclosure are separated from one another.
FIG. 19 is a perspective view illustrating a state in which the driving member and the pusher according to the first embodiment of the present disclosure are separated from one another.
FIG. 20 is a perspective view illustrating a structure of the driving member according to the first embodiment of the present disclosure.
FIG. 21 is a perspective view illustrating a structure of the pusher according to the first embodiment of the present disclosure.
FIG. 22 is a plan view illustrating a state in which the first casing of the clutch driving device according to the first embodiment of the present disclosure is removed.
FIGS. 23 to 25 are operational state views sequentially illustrating a process in which the driving member according to the first embodiment of the present disclosure rotates to raise the pusher.
FIGS. 26 to 29 are operational state views sequentially illustrating a process in which the driving member according to the first embodiment of the present disclosure rotates to raise the pusher.
FIG. 30 is a conceptual view illustrating, in a developed state, a driving cam of the driving member, a sensing fence, and a driven cam of the pusher according to the first embodiment of the present disclosure.
FIGS. 31 to 34 are conceptual views sequentially illustrating a positional relationship between the driving cam and the driven cam when the driving member according to the first embodiment of the present disclosure rotates.
FIG. 35 is a perspective view illustrating a state in which a driving member and a pusher constituting a drum rotation device according to a second embodiment of the present disclosure are separated from each other.
FIG. 36 is a perspective view illustrating a state in which a driving member and a pusher constituting a drum rotation device according to a third embodiment of the present disclosure are separated from each other.
FIG. 37 is a perspective view illustrating a state in which a driving member and a pusher constituting a drum rotation device according to a fourth embodiment of the present disclosure are separated from each other.

### Mode for Invention

Hereinafter, some embodiments of the present disclosure will be described in detail with reference to exemplary drawings. In assigning reference numerals to components of each drawing, it should be noted that the same reference numerals are assigned to the same components as much as possible, even if they are shown in different drawings. Furthermore, in describing the embodiments of the present disclosure, detailed descriptions of well-known configurations or functions will be omitted when it is determined that such descriptions may obscure the understanding of the embodiments of the present disclosure.

The present disclosure relates to a drum rotation device 100 and a laundry treating apparatus including the drum rotation device. Here, the laundry treating apparatus refers to a household appliance in which a drum 30 is rotated, such as a washing machine or a dryer. The laundry treating apparatus may also include a household appliance capable of both washing and drying. Hereinafter, the laundry treating apparatus will be described with reference to a washing machine as an example.

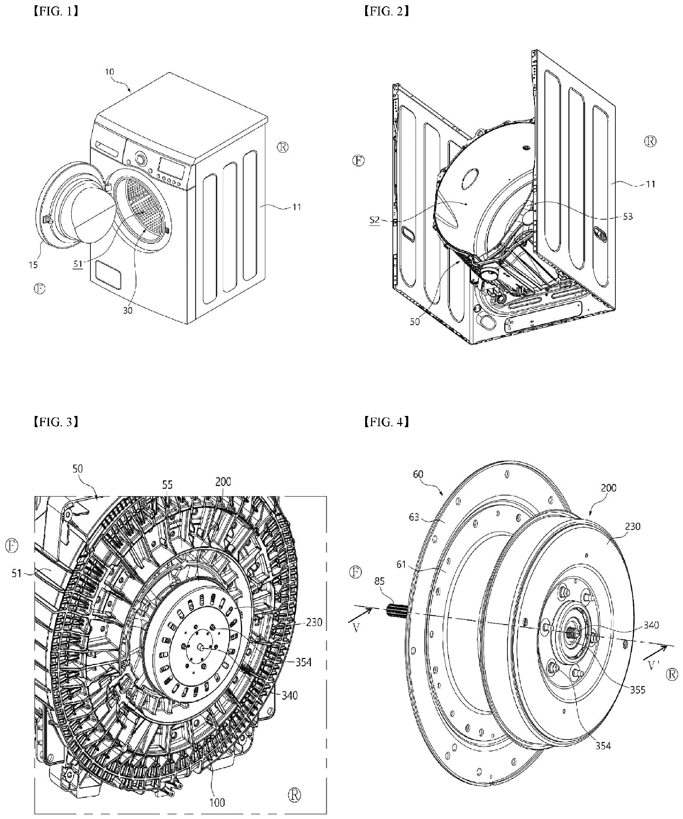

FIG. 1 shows a washing machine, which is a laundry treating apparatus to which the drum rotation device 100 according to the present embodiment is applied. As shown, the framework of the washing machine may be constituted by a casing 10 having an approximately hexahedral shape. The casing 10 may include a frame 11 that constitutes an exterior thereof. A door 15 may be disposed on the front of the casing 10. When the door 15 is opened, a storage space S1 inside the washing machine may be exposed. A user may place laundry into the storage space S1.

For reference, hereinafter, "front" refers to the front of the casing 10 on which the door is disposed, and "rear" refers to the rear of the casing 10, which is opposite to the front. With reference to FIG. 1, a user may put laundry to the rear and take it out toward the front. In the drawing, reference numeral F indicates the front, and reference numeral R indicates the rear.

Furthermore, hereinafter, "an axial direction" refers to the longitudinal direction of an output shaft 80 to be described later. The "axial direction" may also correspond to the longitudinal direction of a motor shaft 340. Hereinafter, "a radial direction" refers to a direction perpendicular to the axial direction and may, for example, extend radially from the center of a rotor 230 constituting a motor 200.

The storage space S1 may be formed inside the drum 30. The drum 30 is a rotating body and may have a shape that surrounds the storage space S1. The drum 30 may be coupled to a spider 53. The spider 53 may be coupled to the drum 30. Therefore, when the spider 53 is rotated by the drum rotation device 100, the drum 30 may also be rotated together.

FIG. 2 illustrates the frame 11, which constitutes the framework of the casing 10, and the structure of a tub 50. For reference, the drum rotation device 100 is disposed between the rear of the tub 50 and the casing 10, and thus is not visible in FIG. 2. The tub 50 may surround the drum 30. That is, the tub 50 may serve as an outer drum, and the drum 30 may serve as an inner drum. Reference numeral S2 denotes a rotation space surrounded by the tub 50, and the drum 30 may be disposed in the rotation space S2. The tub 50 may be coupled to the casing 10 so as not to rotate, and the drum 30 may rotate relative to the tub 50.

A rotating plate (not shown) may be provided inside the tub 50. The rotating plate may perform a washing function by generating a water flow, and while the rotating plate rotates, laundry in the drum 30 may be washed. The rotating plate may also be referred to as a pulsator.

FIG. 3 illustrates a rear structure of the tub 50. For reference, in FIG. 3, the casing 10 that covers the rear surface of the tub 50 is removed, so that the rear of the tub 50 is exposed. The motor 200 of the drum rotation device 100 may be disposed at the center of the rear of the tub 50. The motor 200 may generate rotational force by receiving power from an external power source. In FIG. 3, the rotor 230 constituting the motor 200 is illustrated, and a stator 220 and a gear assembly 300, which will be described later, may be disposed inside the rotor 230.

The tub 50 may include a tub body 51 having an approximately cylindrical shape. The front of the tub body 51 may be open to serve as an entrance to the rotation space S2. The motor 200 may be disposed on the rear surface of the tub body 51. A reinforcing member (not shown) made of a metal material may be embedded in the tub body 51 to reinforce strength.

A rear fence 55 may be provided on the rear surface of the tub body 51. The rear fence 55 may protrude rearward from the rear surface of the tub 50. The rear fence 55 may have a substantially annular shape. The rear fence 55 may be disposed so as to surround the motor 200 and the gear assembly 300. A plurality of reinforcing ribs may be arranged around the rear fence 55.

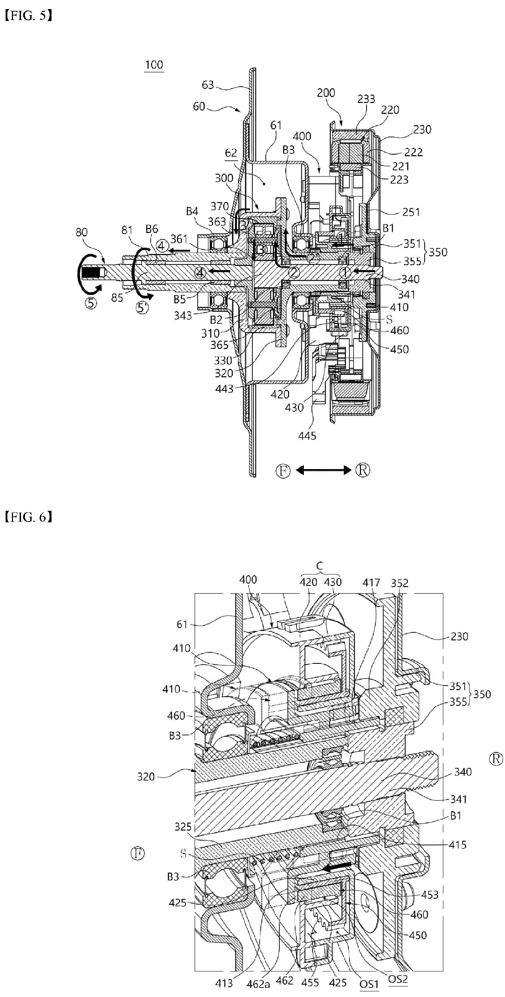

Referring to FIG. 4, a drive part housing 60 may be disposed inside the tub body 51. The drive part housing 60 may accommodate bearings B1 to B6, which will be described below, and the gear assembly 300. The drive part housing 60 may include a first housing 61 and a second housing 63 coupled to the first housing 61. Referring to FIG. 5, a predetermined space, more precisely a drive space 62, may be formed between the first housing 61 and the second housing 63. The gear assembly 300 and two housing bearings B3 and B4, which will be described below, may be disposed in the drive space 62. The drive part housing 60 may be regarded as a portion of the gear assembly 300.

Referring to FIG. 5, the output shaft 80 and the motor shaft 340 may be arranged coaxially with each other. Here, the output shaft 80 and the motor shaft 340 may be considered to be arranged side by side in the axial direction. The gear assembly 300 may be disposed between the output shaft 80 and the motor shaft 340 so as to transmit the rotational force of the motor shaft 340 to the output shaft 80. More precisely, when a washing mode is performed by using the laundry treating apparatus, the gear assembly 300 may reduce the rotational force of the motor shaft 340 and transmit it to the output shaft 80.

For reference, in the washing mode and in an initial spin-drying mode, in which spin-drying begins after washing is completed, weight inside the drum 30 includes not only the weight of laundry but also the weight of water for washing, so the drum rotation device 100 needs to operate with relatively high torque and a low speed. In contrast, in the spin-drying mode in which spin-drying is fully performed, weight inside the drum 30 is lighter due to the reduced amount of water, so the drum rotation device 100 needs to operate with relatively low torque and a high speed. Hereinafter, the "washing mode" and the "spin-drying mode" will be distinguished and described.

In the present embodiment, the output shaft 80 may include two output shafts 80 configured coaxially with each other. The two output shafts 80 may include a first output shaft 81 and a second output shaft 85 that surrounds the first output shaft 81. In the present embodiment, the first output shaft 81 may be coupled to the drum 30 for spin-drying and may rotate the drum 30. The second output shaft 85 may be coupled to a rotating plate 40 for washing and may rotate the rotating plate 40.

The first output shaft 81 and the second output shaft 85 may rotate differently depending on the operating mode of the laundry treating apparatus. For example, when the laundry treating apparatus is in the spin-drying mode, the first output shaft 81 may be directly connected to the rotor 230 and may rotate at high speed. On the other hand, when the laundry treating apparatus is in the washing mode, the second output shaft 85 may rotate at a reduced speed by the gear assembly 300. Therefore, the first output shaft 81 may be referred to as a spin-drying shaft, and the second output shaft 85 may be referred to as a washing shaft.

In this case, the first output shaft 81 may be selectively connected to the rotor 230. When the rotor 230 is connected to the first output shaft 81, the spin-drying mode may be performed, and when the rotor 230 is disconnected from the first output shaft 81, the spin-drying mode may stop. Accordingly, a clutch 410 may be provided to selectively connect the first output shaft 81 to the rotor 230. The clutch 410 may be coupled to or decoupled from a coupler 350 provided on the rotor 230 while moving in the axial direction. In the present disclosure, a clutch driving device 400 may move the clutch 410 in the axial direction to determine whether the first output shaft 81 rotates. This operation method will be described in detail below.

Referring to FIG. 5, a power transmission process in the washing mode and the spin-drying mode will be described. First, when the washing mode is selected, the clutch 410 may be in a disengaged state. Here, the term "disengaged state" refers to a state in which the clutch 410 is separated from the coupler 350 of the rotor 230 so that the rotational force of the rotor 230 is not transmitted to the clutch 410. More specifically, the disengaged state refers to a state in which the clutch 410 is separated from a clutch coupling part 351 of the coupler 350. The disengaged state of the clutch 410 may be achieved by the clutch driving device 400. When the clutch driving device 400 moves the clutch 410 toward the front (in an F direction) away from the coupler 350 by overcoming the elastic force of an elastic member S to be described later, the clutch 410 may be switched to the disengaged state. The detailed operation of the clutch driving device 400 will be described again below.

For reference, in FIG. 6, the clutch 410 in the disengaged state is indicated by a dashed line. In FIG. 6, the clutch 410 indicated by a solid line represents the engaged state, in which the clutch 410 is coupled to the coupler 350. Hereinafter, the term "engaged state" refers to a state in which the clutch 410 is coupled to the coupler 350.

Referring again to FIG. 5, when the clutch 410 is in the disengaged state, the rotational force of the rotor 230 may be transmitted to the motor shaft 340 coupled to the rotor 230 when the rotor 230 rotates, causing the motor shaft 340 to rotate (in the direction of arrow ①). When the motor shaft 340 rotates, the rotational force of the motor shaft 340 may be transmitted to the gear assembly 300. More specifically, when the motor shaft 340 rotates, a sun gear 343 provided on the motor shaft 340 may rotate. The rotational force of the sun gear 343 is transmitted to pinion gears 370 engaged with the sun gear 343 (in the direction of arrow ②).

The pinion gears 370 may move on a fixed internal gear part 330. Here, the movement of the pinion gears 370 on the internal gear part 330 corresponds to orbiting. At the same time, the pinion gears 370 may rotate about their own axes in a direction opposite to that of the sun gear 343. That is, the pinion gears 370 may both orbit and rotate about their own axes simultaneously.

In addition, the rotational force generated by the orbiting of the pinion gears 370 may be transmitted to a carrier 361 constituting the gear assembly 300 (in the direction of arrow ③). The rotational force of the carrier 361 may be transmitted to the second output shaft 85 coupled to the carrier 361 (in the direction of arrow ④). The second output shaft 85 rotates together with the carrier 361 due to the transmitted rotational force, thereby rotating the rotating plate 40. Arrow ⑤ indicates the rotational direction of the second output shaft 85.

In this manner, when the clutch 410 is separated from the coupler 350, the pinion gears 370 may both orbit and rotate simultaneously, and in the process, the rotation speed may be reduced, thereby resulting in a corresponding increase in torque. Therefore, the above-described operation may be performed when a large force is required for rotating the drum 30 or when rotation of the rotating plate 40 is necessary, for example, in the washing mode, where the weight of water is added, or in the initial spin-drying mode in which spin-drying begins.

Meanwhile, referring to FIG. 5, a power transmission process in the spin-drying mode will be described. In the spin-drying mode, the clutch 410 may be in the engaged state, in which the clutch 410 is coupled to the coupler 350. The transition of the clutch 410 from the previous disengaged state to the engaged state may be performed by the clutch driving device 400. More specifically, the clutch 410 may be brought into the engaged state by the clutch driving device 400 and the elastic member S. When the clutch driving device 400 is operated, the elastic member S may move the clutch 410 toward the coupler 350, allowing the clutch 410 to engage with the coupler 350. In this manner, in the present embodiment, a pusher 460 may be moved by using the elastic member S for moving the clutch 410 without requiring a separate spring for the operation of the clutch driving device 400, thereby reducing the number of components and assembly steps.

When the clutch 410 engages with the coupler 350, the clutch 410 may be rotated together with the rotor 230 by the coupler 350, which rotates with the rotor 230. That is, the clutch 410 may be directly connected to the rotor 230 through the coupler 350 and may rotate at the same speed as the rotor 230. FIG. 6 represents a state in which the clutch 410 shown with a solid line is engaged with the coupler 350. Here, the clutch 410 may be engaged with the clutch coupling part 351 constituting the coupler 350.

More specifically, in the engaged state, the rotational force of the rotor 230 may be transmitted to the clutch 410 through the coupler 350 (in the direction of arrow ①'). The rotational force of the clutch 410 may be transmitted to a gear housing 310 and 320 constituting the gear assembly 300. Accordingly, the gear housing 310 and 320 may rotate together with the clutch 410.

More specifically, referring to FIG. 6, a first gear housing 310 constituting the gear housing 310 and 320 may be provided with a housing gear part 325. The housing gear portion 325 may be disposed to surround the motor shaft 340 and, at the same time, may be engaged with the clutch 410 to rotate together therewith. The first gear housing 310 and a second gear housing 320 may be coupled to each other, so that the second gear housing 320 may rotate together with the first gear housing 310. That is, the rotational force of the clutch 410 may be transmitted to the first gear housing 310 (in the direction of arrow ②'), and the rotational force of the first gear housing 310 may be transmitted to the second gear housing 320 (in the direction of arrow ③').

The second gear housing 320 may be engaged with the first output shaft 81, so that the rotational force of the second gear housing 320 may be transmitted to the first output shaft 81 (in the direction of arrow ④'). Accordingly, the first output shaft 81 may rotate together with the gear housing 310 and 320. Arrow ⑤' indicates the rotational direction of the first output shaft 81.

In this case, the internal gear part 330 provided inside the gear housing 310 and 320 may also rotate together with the gear housing 310 and 320. While rotating (orbiting), the internal gear part 330 may cause the pinion gears 370 engaged with the internal gear part 330 to orbit at the same speed. The motor shaft 340 may also rotate together with the rotor 230, but since the internal gear part 330 itself orbits, the sun gear 343 may not rotate on its axis on the internal gear part 330. Accordingly, the rotational speed of the motor shaft 340 may be the same as that of the gear housing 310 and 320, and also the same as the rotational speed of the second output shaft 85.

That is, when the clutch 410 is in the engaged state, the first output shaft 81 and the second output shaft 85 may rotate at the same high speed, and the drum 30 coupled to the first output shaft 81 and the rotating plate 40 coupled to the second output shaft 85 may also rotate at the same speed. As a result, the rotating plate 40 and the drum 30 may rotate at the same speed as the rotational speed of the rotor 230, allowing the drum 30 to rotate at a high speed. When a large force is not required but the drum 30 needs to be rotated at a high speed, for example, during a spin-drying mode in progress, the clutch 410 may be placed in the engaged state.

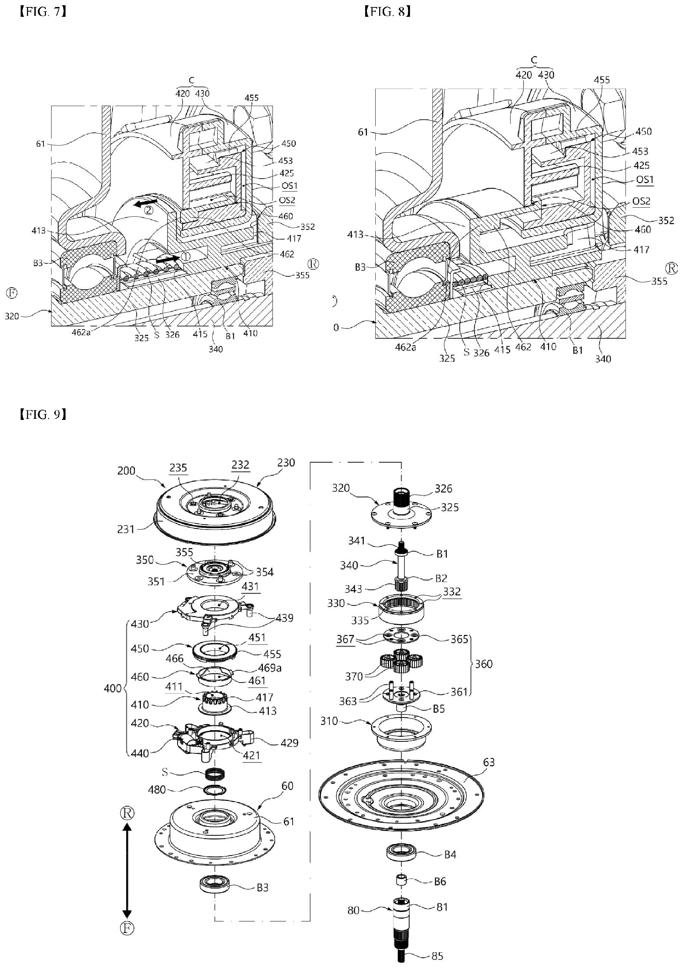

FIGS. 7 and 8 illustrate the clutch 410 in the engaged state and the disengaged state, respectively. The clutch 410 may be switched between the engaged state and the disengaged state. The clutch driving device 400 may move the clutch 410 in the axial direction so as to switch the clutch 410 from the engaged state to the disengaged state, or conversely from the disengaged state to the engaged state.

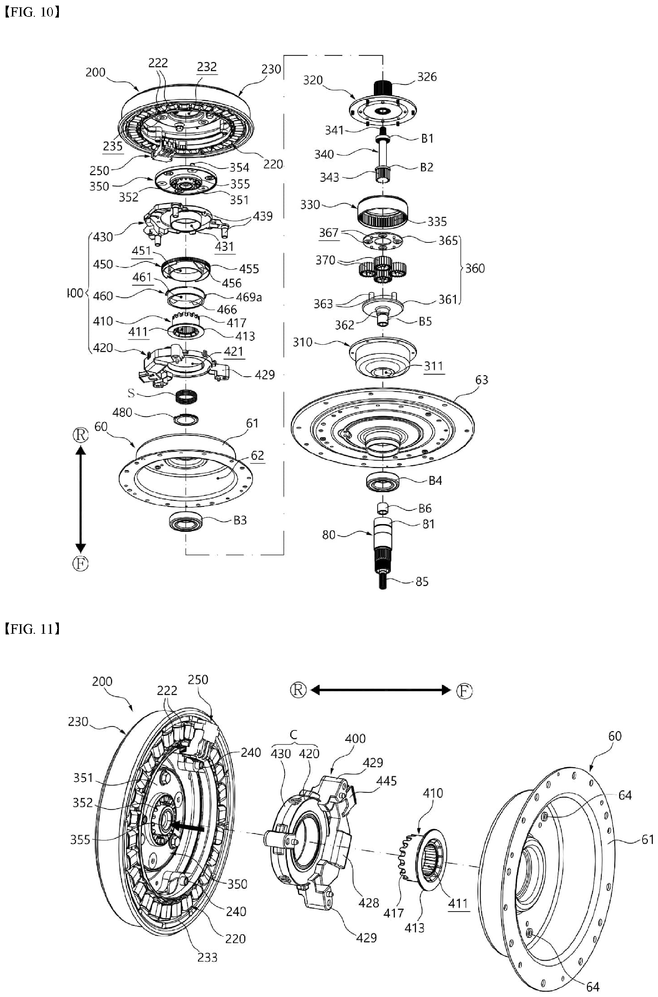

In FIG. 7, the clutch 410 may move rearward and may be engaged with a coupling gear 352. A clutch gear 417 of the clutch 410 may be engaged with the coupling gear 352 so as to be rotatable together therewith. Accordingly, the clutch 410 may rotate together with the coupling gear 352, and as a result, may rotate at the same speed as the rotor 230. Referring to FIG. 10, the coupling gear 352 may be provided on a clutch coupling part 351 of the coupler 350. In FIG. 7, the direction of arrow ① indicates a direction in which the clutch 410 moves into the engaged state and is the same as a direction in which the elastic member S supplies an elastic force to the clutch 410. The direction of arrow ② indicates a direction in which the clutch driving device 400 shifts the clutch 410 into the disengaged state.

Referring to FIG. 8, the clutch 410 may move forward into the disengaged state. When the clutch 410 moves forward, the clutch gear 417 of the clutch 410 may be axially released from the coupling gear 352, thereby being released from the meshed state with each other. Accordingly, the rotation of the coupling gear 352 may not result in the rotation of the clutch 410.

In this way, the clutch driving device 400 may change the power transmission process of the rotor 230 while moving the clutch 410 in forward and rearward directions, that is, in the axial direction. Hereinafter, the power transmission structure of the clutch driving device 400 will be mainly described.

Referring to FIGS. 5 and 10, the drive part housing 60 will be described. The drive part housing 60 may be disposed on the opposite side of the motor 200 with the clutch driving device 400 interposed therebetween. The drive part housing 60 may be mounted to the tub 50. The drive part housing 60 may remain fixed without rotation. The drive space 62 may be formed inside the drive part housing 60. The gear assembly 300 and the two housing bearings B3 and B4 may be disposed in the drive space 62.

The drive part housing 60 may have a framework formed by a housing body 61 and a housing cover 63. When the housing body 61 and the housing cover 63 are coupled to each other, the drive space 62 may be formed therebetween. In the present embodiment, the housing body 61 may be disposed rearward of the housing cover 63.

A portion of the output shaft 80 may be disposed within the drive space 62. Referring to FIG. 5, each of a portion of the first output shaft 81 and a portion of the second output shaft 85 may be disposed within the drive space 62, while other portions thereof may protrude forward from the drive space 62. The portion of the output shaft 80 may be coupled to the gear assembly 300 within the drive space 62.

Next, the motor 200 will be described. The motor 200 may include the stator 220, which is fixed, and the rotor 230 that rotates relative to the stator 220. The stator 220 may include a core 223 on which a metal plate is laminated, and an insulator 221 that surrounds the core 223. The insulator 221 may prevent a current flowing through a coil 222 wound around the teeth of the core 223 from being directly transmitted to the core 223.

The rotor 230 may be disposed to surround the stator 220. A rotor body 231, which constitutes the framework of the rotor 230, may have a larger diameter than the stator 220. A rotor central hole 232 may be formed to be open at the center of the rotor body 231. The motor shaft 340 may be disposed in the rotor central hole 232.

A permanent magnet 233 may be disposed on the rotor 230 to face the core 223. When power is applied to the core 223 through a connector part 250, the rotor 230 may rotate due to induced electromotive force. Alternatively, the rotor 230 may be provided with the core 223 and a coil, and the stator 220 may be provided with the permanent magnet 233. Reference numeral 235 denotes a coupling hole into which a fixed protrusion 354 of the clutch coupling part 351, which constitutes the coupler 350, is inserted.

The gear assembly 300 may be connected to the motor 200. The gear assembly 300 may include the gear housing 310 and 320, the internal gear part 330, the motor shaft 340, the coupler 350, the carrier 360, and the pinion gears 370. These components may in conjunction with each other. The interlocking structure of the gear assembly 300 will be described in detail below.

The gear housing 310 and 320 and the internal gear part 330 may constitute a ring gear and rotate integrally with each other. That is, the ring gear may include the gear housing 310 and 320 and the internal gear part 330. The internal gear part 330 may be disposed inside the gear housing 310 and 320. The gear housing 310 and 320 and the internal gear part 330 may be coupled to each other to rotate or stop together. In another example, the gear housing 310 and 320 and the internal gear part 330 may be formed integrally.

The gear housing 310 and 320 may include the first gear housing 310 and the second gear housing 320. The first gear housing 310 and the second gear housing 320 may be coupled to each other to form an empty space therein. More specifically, when the first gear housing 310 and the second gear housing 320 are coupled, an internal space may be formed therein. Within the internal space, the sun gear 343 and the pinion gears 370 may operate in conjunction with each other. In another example, the gear housing 310 and 320 may include only the first gear housing 310 or only the second gear housing 320.

When the first gear housing 310 and the second gear housing 320 are coupled to each other, the gear housing 310 and 320 may have an approximately cylindrical shape. The gear housing 310 and 320 may have a central portion formed therethrough in the axial direction. In this embodiment, the motor shaft 340 may pass through the central portion of the first gear housing 310, and the output shaft 80 may pass through the central portion of the second gear housing 320.

Referring to FIGS. 9 and 10 for a detailed view of the gear assembly 300, the first gear housing 310 may have a cylindrical shape with a recessed interior. A first housing hole 311 may be formed by penetrating the center of the first gear housing 310, and the output shaft 80 may pass through the first housing hole 311.

On the opposite side of the first gear housing 310, the second gear housing 320 may be coupled. The second gear housing 320 may have an approximately disc-shaped form. The second gear housing 320 may be disposed closer to the rotor 230 than the first gear housing 310. The second gear housing 320 may be provided with the housing gear part 325. The housing gear part 325 is configured to be engaged with the clutch 410. Through the housing gear part 325, the second gear housing 320 may be engaged with the clutch 410 and rotate together with the clutch 410.

The housing gear part 325 may protrude axially from the central portion of the second gear housing 320. The housing gear part 325 may protrude in an approximately cylindrical shape, and the motor shaft 340 may be disposed inside the housing gear part 325, so that the housing gear part 325 may surround the motor shaft 340. Referring to FIG. 6, one end portion of the housing gear part 325 may be disposed to face a motor-shaft coupling part 355 of the coupler 350 in the axial direction.

The surface of the housing gear part 325 may be provided with housing gear teeth 326. The housing gear teeth 326 may be gear-shaped teeth provided on the surface of the housing gear part 325 and may engage with inner circumferential gear teeth 415 (see FIG. 7) formed on the inner circumferential surface of the clutch 410. By meshing the housing gear teeth 326 with the inner circumferential gear teeth 415, the clutch 410 may transmit the rotational force of the rotor 230 to the gear housing 310 and 320. In this embodiment, the clutch 410 and the gear housing 310 and 320 may always rotate or stop together due to the engagement between the inner circumferential gear teeth 415 and the housing gear teeth 326.

Referring to FIG. 9, the internal gear part 330 may be arranged inside the gear housing 310 and 320. The internal gear part 330 may be formed in an annular shape. The internal gear part 330 may be coupled to the gear housing 310 and 320 so as to rotate integrally therewith. For such coupling, the internal gear part 330 may be provided with internal protrusions 332 that are coupled to the gear housing 310 and 320. The internal protrusions 332 may protrude in the axial direction from the surface of the internal gear part 330.

The inner surface of the internal gear part 330 may be provided with internal gear teeth 335. The internal gear teeth 335 may mesh with the pinion gears 370 to rotate. When the pinion gears 370 rotate while meshed with the internal gear teeth 335, the pinion gears 370 may either (i) rotate (both orbit and rotate on their axes) while meshing with the internal gear part 330 that does not receive rotational force (the washing mode), or (ii) rotate (orbit) while meshing with the internal gear part 330 which is rotating (orbiting) (the spin-drying mode). The internal gear teeth 335 and the pinion gears 370 may be formed as helical gears. Alternatively, the internal gear teeth 335 and the pinion gears 370 may be formed as spur gears.

The gear assembly 300 may include the motor shaft 340. Since the motor shaft 340 receives the rotational force of the rotor 230, the motor shaft 340 may be regarded as a type of input shaft. The motor shaft 340 may rotate integrally with the rotor 230. Whenever the rotor 230 rotates, the motor shaft 340 may rotate together with the rotor 230 and may transmit the rotational force thereof to the output shaft 80 through the gear assembly 300.

On the outer peripheral surface of the motor shaft 340, a rotor connection part 341 and the sun gear 343 may be provided to be spaced apart from each other in the axial direction. The rotor connection part 341 may be provided on the outer circumferential surface of the motor shaft 340 and may be connected to the rotor 230. The rotor connection part 341 may be configured as a spline or a serration. The rotor connection part 341 may be coupled to the center of the motor-shaft coupling part 355 to be described below. The rotor connection part 341 may not be a gear structure, but engage with the motor-shaft coupling part 355 to allow the motor shaft 340 to rotate together with the coupler 350.

The sun gear 343 may be spaced apart from the rotor connection part 341 in the axial direction of the motor shaft 340. The sun gear 343 may engage with the pinion gears 370. The sun gear 343 may allow the rotation of the motor shaft 340 to be transmitted to the rotation of the pinion gears 370. The sun gear 343 may be formed to have a larger diameter than the rotor connection part 341. The sun gear 343 may be formed as a helical gear or a spur gear, or the like.

The carrier 360 may be disposed in the gear housing 310 and 320. The carrier 360 may support the rotation of the pinion gears 370 and may rotate along with the pinion gears 370. More specifically, the carrier 360 may rotate in conjunction with the orbiting of the pinion gears 370. As shown in FIG. 10, the carrier 360 may be provided with an output part 362, whereby the carrier 360 may rotate the second output shaft 85. That is, the rotational motion of the gear assembly 300 may be transmitted to the second output shaft 85 through the carrier 360.

Referring to the structure of the carrier 360, the carrier 360 may include a carrier body 361 and a carrier cover 365. The carrier body 361 may be arranged to be spaced forward from the carrier cover 365 with the pinion gears 370 disposed therebetween. The output part 362 may protrude from the carrier body 361. A spline or a serration may be formed on the output part 362, so that it may be coupled to the outer circumferential surface of the second output shaft 85. A spline or a serration may be formed even on the outer circumferential surface of the second output shaft 85.

The carrier body 361 may be provided with pinion shafts 363, and the carrier cover 365 may have shaft support holes 367 formed at positions corresponding to the pinion shafts 363. One end portion of each of the pinion shafts 372, which serve as rotational axes of the pinion gears 370, may be inserted into each of the shaft support holes 367. In this embodiment, since a total of four pinion gears 370 are provided in the gear assembly 300, four pinion shafts 363 and four shaft support holes 367 may be provided. The pinion shafts 363 may be configured as components separate from the carrier body 361.

Referring to the pinion gears 370, the pinion gears 370 may be arranged to surround the sun gear 343. The pinion gears 370 may rotate by being engaged with the sun gear 343 and the internal gear part 330. More specifically, the pinion gears 370 may be disposed between the outer circumferential surface of the sun gear 343 and the inner circumferential surface of the internal gear part 330, so that a rotational force input through the sun gear 343 may be output to the internal gear part 330. When the clutch 410 is in the disengaged state, the internal gear part 330 either may not rotate or rotate at a very low speed. Accordingly, in the disengaged state, the pinion gears 370 may both rotate and orbit on the internal gear part 330. Conversely, when the clutch 410 is in the engaged state, the internal gear part 330 may rotate together with the clutch 410, so that the pinion gears 370 may not rotate on their own axes but rotate together with the internal gear part 330 while orbiting around the sun gear 343.

Referring to FIGS. 5 and 9, the bearings B1 to B6 that assist the rotation of the gear assembly 300 may include a first support bearing B1 and a second support bearing B2. The first support bearing B1 and the second support bearing B2 may be spaced apart from each other in the axial direction to support the rotation of the motor shaft 340. In another example, one of the first support bearing B1 and the second support bearing B2 may be omitted, or the first support bearing B1 and the second support bearing (B2) may be arranged in the radial direction.

The housing bearings B3 and B4 may be disposed between the drive part housing 60 and the gear housing 310 and 320. The housing bearings B3 and B4 may support the rotation of the gear housing 310 and 320 when the gear housing 310 and 320 rotates relative to the drive part housing 60. In this embodiment, the housing bearings B3 and B4 may be configured as a pair of housing bearings B3 and B4 spaced apart from each other in the axial direction.

Shaft bearings B5 and B6 may be disposed between the first output shaft 81 and the second output shaft 85. The shaft bearings B5 and B6 may facilitate the relative rotation of the first output shaft 81 and the second output shaft 85. In this embodiment, the two shaft bearings B5 and B6 may be disposed to be spaced apart from each other in the axial direction.

Next, the clutch 410 and the clutch driving device 400 that drives the clutch 410 will be described. The clutch driving device 400 may move the clutch 410 by using rotation input through a driving source 441. In this case, the clutch 410 may also be considered as constituting a portion of the clutch driving device 400.

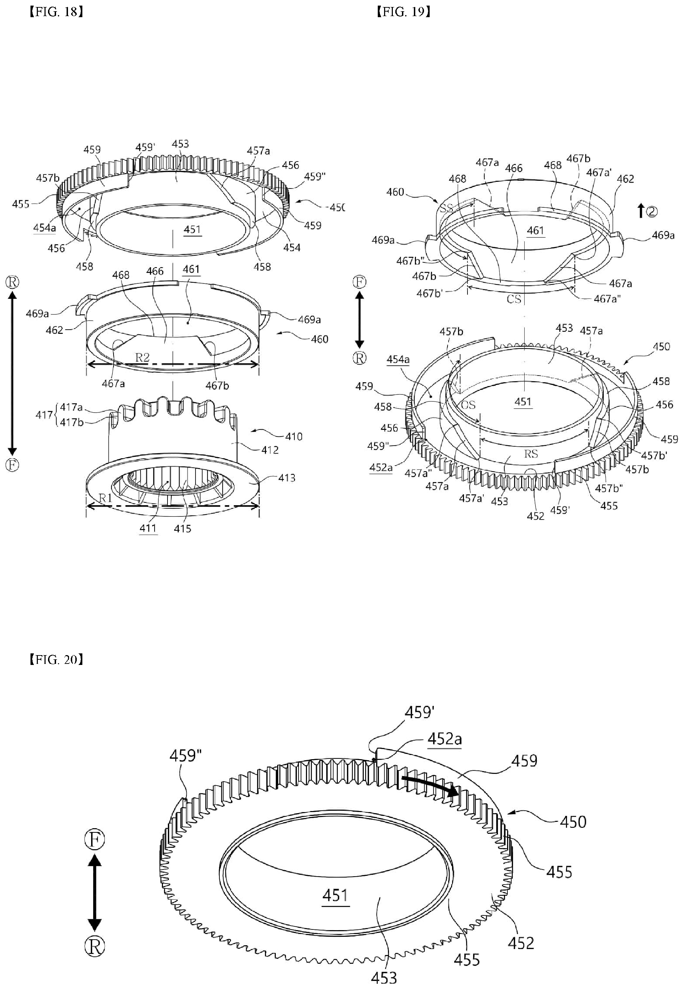

For convenience of description, referring first to the clutch 410, the clutch 410 may have an approximately tubular shape. In FIG. 18, reference numeral 412 denotes a clutch body 412 constituting the framework of the clutch 410. With the clutch body 412 disposed at the central portion of the clutch driving device 400, the clutch 410 may move in the axial direction. A clutch hole 411, which passes through the clutch body 412 in the axial direction, may be formed at the central portion of the clutch body 412. The motor shaft 340 and the housing gear part 325 may pass through the clutch hole 411.

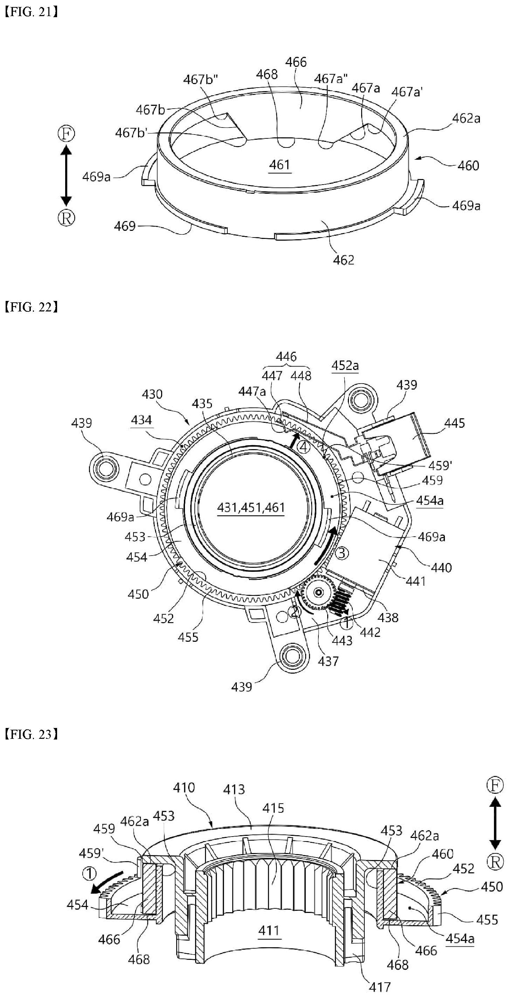

A contact support portion 413 may be provided at the edge of the clutch hole 411. The contact support portion 413 may be provided in a direction in which the diameter of the clutch 410 is increased. The contact support portion 413 may be a portion that is pushed by the pusher 460. More specifically, a pushing surface 462a of the pusher 460 (see FIG. 23) may lift the contact support portion 413 in the axial direction. The contact support portion 413 may be held by the pushing surface 462a of the pusher 460 and serve as a stopper to limit the movement range of the clutch 410.

The inner circumferential gear teeth 415 may be provided on the inner circumferential surface of the clutch hole 411. The inner circumferential gear teeth 415 may be engaged with the housing gear teeth 326, allowing the clutch 410 to transmit the rotational force of the rotor 230 to the gear housing 310 and 320. In this embodiment, the clutch 410 and the gear housing 310 and 320 may always rotate or stop together, as the inner circumferential gear teeth 415 and the housing gear teeth 326 are engaged.

The clutch gear 417 may be provided on the clutch body 412. The clutch gear 417 may be provided on the side opposite to the contact support portion 413. The clutch gear 417 may be engaged with the coupling gear 352 of the coupler 350 when the clutch 410 moves rearward. When the clutch gear 417 is engaged with the coupling gear 352, the clutch 410 may rotate together with the rotor 230. Accordingly, the gear housing 310 and 320 and the internal gear part 330 coupled to the clutch 410 may also rotate together.

The clutch gear 417 may have a type of gear structure. Referring to FIG. 18, the clutch gear 417 may include a toothed portion of the clutch 410. The toothed portion of the clutch 410 may have a structure in which a protruding portion 417a protruding rearward and a recessed portion 417b recessed forward are connected to each other. The clutch gear 417 may be engaged with or disengaged from the coupling gear 352 while the clutch 410 moves in the axial direction.

Referring to FIG. 11, the clutch driving device 400 may be disposed between the motor 200 and the drive part housing 60. Since the drive part housing 60 can be considered as a portion of the gear assembly 300 that constitutes the exterior of the gear assembly 300, the clutch driving device 400 may be consequently disposed between the motor 200 and the gear assembly 300 in the axial direction. In this case, opposite ends of the clutch driving device 400 may be coupled to the motor 200 and the drive part housing 60, respectively. Referring to FIG. 11, the motor 200 may be coupled to the clutch driving device 400 from the rear side of the clutch driving device 400, and the drive part housing 60 may be coupled to the clutch driving device 400 from the front side of the clutch driving device 400. In this case, the motor 200 may be coupled to the drive part housing 60 (the gear assembly 300) via the clutch driving device 400, and thus a separate structure for mounting the motor 200 may be omitted. Accordingly, the number of components required for mounting the motor 200 may be reduced, and since the motor 200 is fixed together during the mounting of the clutch driving device 400, the assembly time may also be reduced.

More specifically, a motor fastening part 240 may be provided on the stator 220 of the motor 200. A housing fastening part 64 may be provided on the drive part housing 60. The clutch driving device 400 may be provided with mounting brackets 429 corresponding to the motor fastening part 240 and the housing fastening part 64, respectively. With the housing fastening part 64, the mounting brackets 429, and the motor fastening part 240 aligned, they may be assembled together by using fasteners (not shown) such as bolts. In this case, the fasteners may assemble the three components of the drive part housing 60, the motor 200, and the clutch 410 simultaneously.

In FIG. 11, the clutch 410 is shown to be disposed forward of the clutch driving device 400, that is, closer to the drive part housing 60. However, when the clutch 410 is actually assembled rearward (to the left in the drawing) between the clutch driving device 400 and the drive part housing 60, the clutch gear 417 of the clutch 410 may pass through the central portion of the clutch driving device 400 and protrude toward the motor 200.

The elastic member S (see FIG. 7) may always press the clutch 410 rearward (toward the motor 200), but the clutch driving device 400 may push the clutch 410 in the opposite forward direction (toward the drive part housing 60), allowing the clutch 410 to switch from the engaged state to the disengaged state. As will be described below, when the pusher 460 of the clutch driving device 400 pushes the contact support portion 413 of the clutch 410 forward, the clutch 410 may move away from the coupler 350 of the rotor 230 and enter the disengaged state. In FIG. 11, the arrow indicates the direction in which the clutch 410 engages with the coupler 350 of the rotor 230.

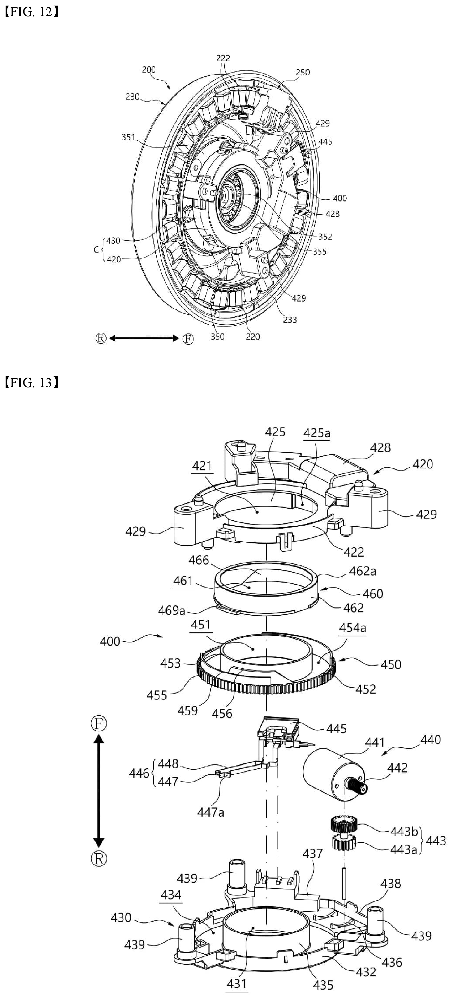

FIG. 12 illustrates the clutch driving device 400 coupled to the motor 200. As shown, the diameter of the clutch driving device 400 may be smaller than that of the motor 200. In this configuration, the entire clutch driving device 400 may not protrude radially outward beyond the motor 200. Therefore, it is not necessary to secure an area for installing the clutch driving device 400 at an area outside the motor 200, and the overall size of the drum rotation device 100 may be reduced.

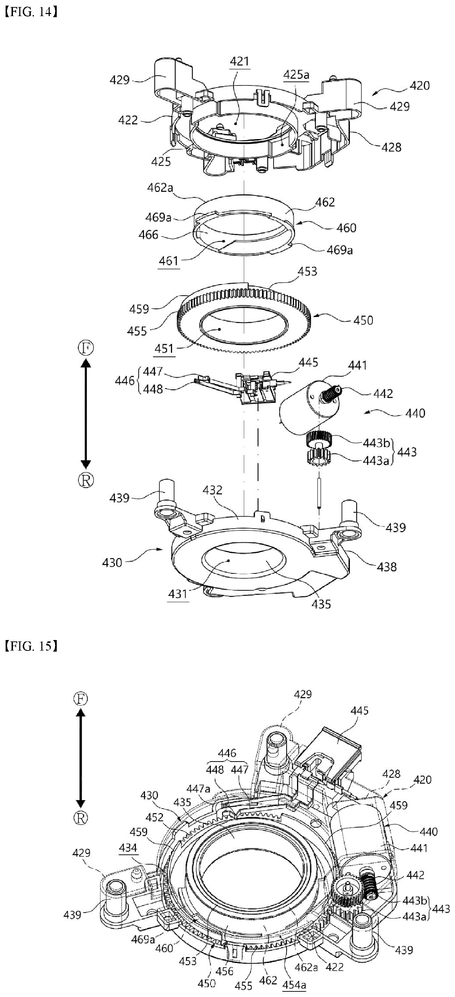

The clutch driving device 400 will be described with reference to FIGS. 13 and 14. The clutch driving device 400 may include a drive casing C. The drive casing C may constitute the framework of the clutch driving device 400. An operation space OS1 (see FIG. 6) may be formed inside the drive casing C. A driving member 450 and the pusher 460 may be disposed in the operation space OS1. As described above, the motor 200 and the drive part housing 60 may be coupled to each other through the drive casing C.

In this embodiment, the drive casing C may include a first casing 420 and a second casing 430. The first casing 420 and the second casing 430 may be coupled to each other in the axial direction. When the first casing 420 and the second casing 430 are coupled to each other, the operation space OS1 (see FIG. 6) may be formed therebetween. The first casing 420 may be disposed forward of the second casing 430, that is, relatively closer to the gear assembly 300. The first casing 420 and the second casing 430 may be coupled to each other by a hook structure (a reference numeral not provided). Alternatively, the first casing 420 and the second casing 430 may be fastened to each other by a fastening member.

Each of the first casing 420 and the second casing 430 may have a substantially annular shape or short tubular shape. When the first casing 420 and the second casing 430 are assembled with each other, a hole may be formed in the central portion of the drive casing C by axially penetrating the drive casing C. The hole may constitute a continuous through-hole 421 and 431 in which a first through-hole 421 formed in the first casing 420 and a second through-hole 431 formed in the second casing 430 are connected to each other. As will be described below, each of the driving member 450 and the pusher 460, which is disposed in the drive casing C, may also have a substantially annular shape or a short tubular shape with a through-hole at the center thereof, so a circular through-hole may be formed at the central portion of the clutch driving device 400. The motor shaft 340 may pass through such a through-hole 421 and 431).

The first through-hole 421 formed in the first casing 420 may allow the pusher 460 to move into the first through-hole 421 and out of the first through-hole 421. A portion of the pusher 460 may move in and out axially through the first through-hole 421. Therefore, the first through-hole 421 may be referred to as a pusher movement hole 421. In this case, the radius of the pusher movement hole 421 may be smaller than a radial distance between the center of the pusher 460 and the end of an anti-rotation protrusion part 469a described below. In this configuration, the anti-rotation protrusion part 469a may be held on the edge of the pusher movement hole 421, thereby limiting the movement of the pusher 460.

Referring to the structure of the first casing 420, the framework of the first casing 420 may be formed by casing body parts 422 and 425, which have a substantially annular shape or a short tubular shape. The casing body parts 422 and 425 may surround the first through-hole 421 formed at a center thereof. As shown in FIG. 14, the interior of the first casing 420 may include the casing body parts 422 and 425, which are two ring structures having different diameters. The two casing body parts 422 and 425 may include an outer body part 422 and an inner body part 425. A sensing fence 459 of the driving member 450, which will be described below, may be disposed between the two casing body parts 422 and 425. With the sensing fence 459 disposed between the two casing body parts 422 and 425, the driving member 450 may rotate.

A rotation-preventing portion 425a may be formed on the casing body parts 422 and 425 of the first casing 420. More specifically, the rotation-preventing portion 425a may be formed on the inner circumferential surface of the inner body part 425, which is disposed inwardly, among the two casing body parts 422 and 425. The rotation-preventing portion 425a may prevent the rotation of the pusher 460. The rotation-preventing portion 425a may guide the pusher 460 to move only rectilinearly in the axial direction without rotating. To this end, the rotation-preventing portion 425a may be continuously formed along the moving direction of the pusher 460. Referring to FIGS. 13 and 14, the rotation-preventing portion 425a may extend continuously in the vertical direction.

The rotation-preventing portion 425a may have a recessed structure in the inner circumferential surface 425 of the first casing 420. The anti-rotation protrusion part 469a of the pusher 460 may be inserted into the recessed rotation-preventing portion 425a. With the anti-rotation protrusion part 469a inserted into the rotation-preventing portion 425a, the pusher 460 may move in the axial direction. Since the anti-rotation protrusion part 469a interferes with the rotation-preventing portion 425a, the pusher 460 may not rotate during the axial movement. In another example, the rotation-preventing portion 425a may protrude from the inner circumferential surface 425 of the first casing 420, and the pusher 460 may be provided with a rotation-preventing recess (not shown) into which the rotation-preventing portion 425a is inserted.

The first casing 420 may be provided with a first driving source mounting part 428. The first driving source mounting part 428 may be configured to accommodate a driving module 440. The driving module 440 may be disposed between the first driving source mounting part 428 and a second driving source mounting part 438 to be described later, so that the driving module 440 may be shielded by the first casing 420 and the second casing 430. The first driving source mounting part 428 may have a structure radially extending from the first casing 420. In this embodiment, the first driving source mounting part 428 may be formed higher in the axial direction than the central portion of the first casing 420.

The first casing 420 may be provided with the mounting brackets 429. The mounting brackets 429 may protrude radially from the first casing 420. The mounting brackets 429 may be coupled to the motor 200 and the drive part housing 60. Referring to FIG. 11, the housing fastening part 64, the mounting brackets 429, and the motor fastening part 240 may be aligned with one another, and assembled together by fasteners (not shown), such as bolts. The plurality of mounting brackets 429 may be arranged around the outer circumferential surface of the first casing 420, and in this embodiment, a total of three mounting brackets 429 may be provided on the first casing 420.

The first casing 420 may be coupled to the second casing 430. The second casing 430 may have a structure corresponding to the first casing 420. The second casing 430 may be coupled to the first casing 420 to constitute the drive casing C. The second casing 430 may include a second body portion 432 having an annular shape or a short tubular shape. The second body portion 432 may be provided with a fastening step (not designated by reference numeral) for coupling with the first casing 420.

The second casing 430 may be provided with a driving guide 435 having a smaller diameter than the second body portion 432 and surrounding the second through-hole 431. The driving guide 435 may have a substantially annular shape or a short tubular shape. The driving member 450 may rotate while surrounding the driving guide 435. The driving member 450 may be rotated with the driving guide 435 serving as a rotational axis. More specifically, a guide fence 453 of the driving member 450 may rotate while surrounding the driving guide 435.

An accommodation space 434, which is a kind of empty space, may be formed between the driving guide 435 and the second body portion 432. The driving member 450 may be seated in the accommodation space 434. The accommodation space 434 may be formed continuously along a circumferential direction of the second body portion 432, and the driving member 450 may be rotated within the accommodation space 434.

The second casing 430 may include the second driving source mounting part 438. The second driving source mounting part 438, together with the first driving source mounting part 428, may fix the driving module 440. Components constituting the driving module 440 may be arranged between the second driving source mounting part 438 and the first driving source mounting part 428. Reference numeral 436 indicates a seating rib for fixing the driving source 441, and the driving source 441 may be disposed on the seating rib 436. A connector mounting part 437 may be provided at a position adjacent to the second driving source mounting part 438, and a driving connector 445 may be disposed on the connector mounting part 437.

The second casing 430 may include a mounting boss 439. The mounting boss 439 may protrude in the axial direction from the radial outer side of the second casing 430. The mounting boss 439 may be accommodated inside the mounting brackets 429. The mounting boss 439 may have a passage through which a fastener passes while being accommodated in the mounting brackets 429. To that end, the interior of the mounting boss 439 may be hollowed out in the axial direction.

The driving module 440 may be disposed in the drive casing C. The driving module 440 may provide driving force to the clutch driving device 400. Here, the driving force may be rotational force that rotates the driving member 450. The driving module 440 may include the driving source 441 configured as the motor 200. The driving source 441 may receive power from the driving connector 445 and provide rotational force. The driving source 441 may be configured as a step motor.

A plurality of transmission gears 443 may be connected to the driving source 441. The plurality of transmission gears 443 may reduce the rotational speed of the driving source 441 and increase torque thereof. In this embodiment, the plurality of transmission gears 443 may include a first transmission gear 443a and a second transmission gear 443b. Among the transmission gears 443, the second transmission gear 443b may be engaged with a gear 442 of the driving source 441 to rotate, and the first transmission gear 443a may be engaged with a driving gear 455 of the driving member 450.

A sensing switch 446 may be connected to the driving connector 445. The sensing switch 446 may control the operation of the driving source 441. According to whether the sensing switch 446 is turned on or off, power may be selectively transmitted to the driving source 441. For example, when the sensing switch 446 is in the on state, power to the driving source 441 may be cut off, and the rotation of the driving member 450 may stop.

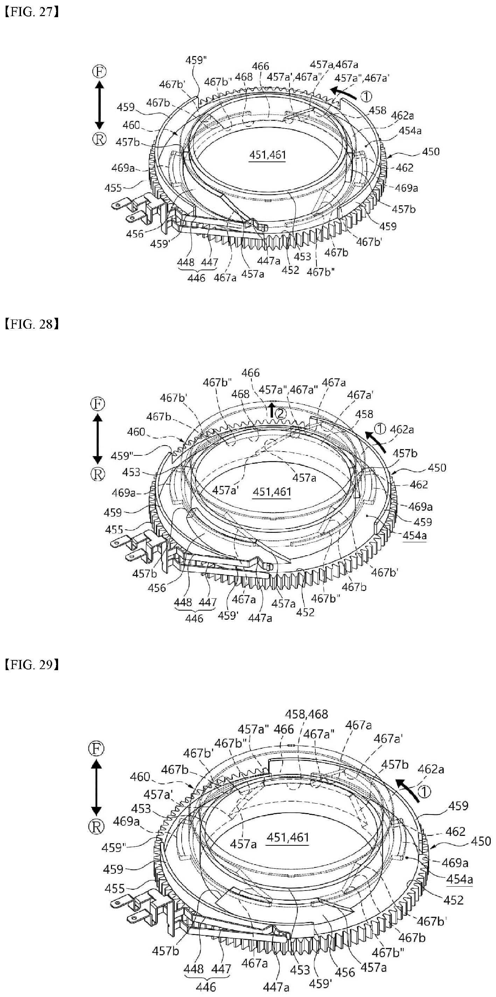

Here, the on state means that two switching terminals 447 and 448 constituting the sensing switch 446 are electrically connected to each other, and the off state means that the two switching terminals 447 and 448 constituting the sensing switch 446 are not electrically connected to each other. For reference, FIG. 28 illustrates the two switching terminals 447 and 448 spaced apart in a non-contact state, and FIG. 29 illustrates the two switching terminals 447 and 448 in contact with each other. In this embodiment, the sensing switch 446 may be turned on or off by the sensing fence 459 of the driving member 450. This structure will be described again below.

Next, the driving member 450 and the pusher 460 will be described. The driving member 450 may have the rotational center concentric with the motor shaft 340 and be rotated by the driving source 441. The pusher 460 may move in the axial direction in conjunction with the rotation of the driving member 450 and may move the clutch 410 in the axial direction. In this embodiment, the pusher 460 may perform only rectilinear movement in the axial direction, and the driving member 450 that operates the pusher 460 may perform only rotational movement about the motor shaft 340. In this case, the driving member 450 may not need to move rectilinearly, and the pusher 460 may not need to perform rotational movement, so the gear shape for interlocking with the driving source 441 and the cam shape for moving the pusher 460 may be implemented simply.

The driving member 450 and the pusher 460 may be arranged concentrically. In this embodiment, the driving member 450 and the pusher 460 may be arranged concentrically with the motor shaft 340. The driving member 450 and the pusher 460 may be arranged to surround the motor shaft 340, thereby having a coaxial relationship. When the driving member 450 and the pusher 460 are arranged concentrically in this manner, the clutch driving device 400 may be arranged to overlap axially with the motor 200 at the central portion thereof. Accordingly, the clutch driving device 400 may be prevented from increasing the diameter of the drum rotation device 100.

The driving member 450 may be arranged on the clutch driving device 400 so that its movement in the axial direction is restricted. The pusher 460 may be disposed in the clutch driving device 400 so that relative rotation thereof with respect to the driving member 450 is restricted. That is, the driving member 450 may perform only rotational movement, and the pusher 460 may perform only rectilinear movement. In conjunction with the rotational movement of the driving member 450, the pusher 460 may perform rectilinear movement in the axial direction.

The driving member 450 may be arranged closer to the motor 200 than the pusher 460 in the axial direction. Referring to FIG. 10, the driving member 450 is seen to be arranged at an upper portion closer to the motor 200 than the pusher 460 in the axial direction. In this arranged state, the driving member 450 may move the pusher 460 in the direction away from the motor 200 in the axial direction, that is, toward the gear assembly 300.

The driving member 450 and the pusher 460 may be arranged to overlap each other in the radial direction. Referring to FIG. 6, the driving member 450 and the pusher 460 are arranged to be concentric and overlap each other in the radial direction. In this embodiment, the driving member 450 may be arranged to surround the periphery of the pusher 460. Accordingly, the driving member 450 and the pusher 460 may minimize the axial height of the clutch driving device 400.

The clutch 410 may be arranged to overlap with the driving member 450 and the pusher 460 in the radial direction. As shown in FIG. 6, a portion of the clutch 410 may overlap with the driving member 450 and the pusher 460 in the radial direction. In this embodiment, a portion of the clutch 410 may overlap with the driving member 450 and the pusher 460 in the radial direction, and the remaining portions thereof may protrude forward and rearward from the driving member 450 and the pusher 460 in the axial direction. Among the protruding portions of the clutch 410, the rearward protruding portion may constitute the clutch gear 417, which is coupled to the coupler 350, and the forward protruding portion may constitute the contact support portion 413, which is pressed by the pusher 460.

The pusher 460 may be guided by the outer circumferential surface of the driving member 450 and move in the axial direction. The pusher 460 may be guided by the drive casing C and perform only rectilinear motion. In this case, the pusher 460 may move rectilinearly in conjunction with the rotation of the driving member 450. In this embodiment, a driving cam 456 for guiding the pusher 460 may be provided on the outer circumferential surface of the driving member 450, and a driven cam 466 corresponding to the driving cam 456 may be provided on the pusher 460. The driving cam 456 may guide the driven cam 466 such that the pusher 460 may rectilinearly move. Accordingly, the driving cam 456 may be referred to as a guide cam portion, and the driven cam 466 may be referred to as a lifting guide part. This structure will be described in detail below.

Referring to FIGS. 13 and 14, the driving member 450 may have a substantially annular shape or a short tubular shape. The driving member 450 may include a drive body 452. The drive body 452 may have an annular shape or a short tubular shape. The drive body 452 may constitute a portion of the driving member 450 having a largest diameter.

The driving member 450 may be provided with the guide fence 453 having a smaller diameter than the drive body 452. The guide fence 453 may be formed along the circumferential direction of the driving member 450 and surround the first driving hole 451 formed at the central portion thereof. The driving cam 456 may be provided on the outer circumferential surface of the guide fence 453. The outer diameter of the guide fence 453 may be smaller than or equal to the inner diameter of the pusher 460. The pusher 460 may overlap the guide fence 453 such that the outer circumferential surface of the guide fence 453 and the inner circumferential surface of the pusher 460 face each other. The guide fence 453 may be regarded as a part that guides the rectilinear movement of the pusher 460.

The inner diameter of the guide fence 453 may be larger than the outer diameter of the driving guide 435 of the second casing 430. The guide fence 453 may rotate while surrounding the driving guide 435. That is, with the guide fence 453 disposed between the driving guide 435 and the pusher 460, the driving guide 435 may be arranged radially inward of the guide fence 453, and the pusher 460 may be arranged radially outward of the guide fence 453.

Referring to FIG. 6, the guide fence 453 is illustrated to be arranged between the driving guide 435 and the pusher 460. A fence rotation space OS2 may be formed between the driving guide 435 and the pusher 460. The guide fence 453 may be arranged within the fence rotation space OS2. Through this structure, the guide fence 453 of the driving member 450 may rotate between the driving guide 435 and the pusher 460.

Furthermore, as shown in FIG. 6, the pusher 460 may be disposed in the operation space OS1 formed between the guide fence 453 and the inner body part 425 of the first casing 420. Accordingly, the pusher 460 may perform rectilinear movement between the guide fence 453 and the inner body part 425 of the first casing 420.

Referring again to FIG. 13, the driving gear 455 may be provided along the circumferential direction of the drive body 452. The driving gear 455 may be engaged with the first transmission gear 443a connected to the driving source 441 to rotate. The driving gear 455 may be provided continuously on the outer circumferential surface of the drive body 452 in the circumferential direction thereof. Accordingly, the driving member 450 may continuously rotate in a first direction. Here, the first direction may be a counterclockwise direction with respect to FIG. 15.

The driving cam 456 whose axial distance varies may be provided on the surface of the guide fence 453 along the circumferential direction of the guide fence 453. During the rotation of the driving member 450, the driving cam 456 may raise or lower the pusher 460. In this case, the lowering of the pusher 460 may be performed by the driving cam 456 and the elastic member S. The detailed structure of the driving cam 456 will be described again below.

The sensing fence 459 may be provided along the circumferential direction of the driving member 450 at the edge thereof. The sensing fence 459 may be provided along the edge of the drive body 452. The sensing fence 459 may protrude in the axial direction from the edge of the drive body 452. The sensing fence 459 may be provided to have an axial height different from that of the driving gear 455.

A sensing avoidance portion 452a, in which the sensing fence 459 is omitted, may be formed along the circumferential direction of the driving member 450 at the edge thereof. The sensing avoidance portion 452a may be regarded as being arranged between two sensing fences 459 spaced apart from each other. Referring to FIG. 18, the sensing avoidance portion 452a may be formed between the ends 459' and 459'' of the two spaced sensing fences 459. As a result, the sensing fence 459 and the sensing avoidance portion 452a may be alternately arranged on the edge of the driving member 450 in the circumferential direction thereof.

During the rotation of the driving member 450, the sensing fence 459 may interfere with a switch device, causing the sensing fence 459 to turn the sensing switch 446 on or off. The sensing fence 459 may interfere with one of the two switching terminals 447 and 448 constituting the sensing switch 446 and may push one of the switching terminals toward the other. In this embodiment, the sensing fence 459 may interfere with the first switching terminal 447, which is relatively closer to the driving member 450 in the radial direction among the switching terminals 447 and 448. Reference numeral 447a denotes a sensing interference portion 447a protruding in the radial direction of the driving member 450 from the first switching terminal 447. The sensing fence 459 may interfere with the sensing interference portion 447a.

The driving member 450 may be provided with the sensing fences 459 and the driving cams 456 which are equal to each other in number. In this embodiment, the driving member 450 may be provided with two sensing fences 459 and two driving cams 456. Since the sensing fence 459 detects the operating state (rotation state) of the driving cam 456 and activates the sensing switch 446, it is preferable that the sensing fences 459 are equal in number to the driving cams 456.

A lifting space 454a, which is a kind of empty space, may be formed between the guide fence 453 and the sensing fence 459. The pusher 460 may be disposed in the lifting space 454a and may move in the axial direction within the lifting space 454a. Referring to FIG. 18, the lifting space 454a is open forward but blocked at the rear by a bottom portion 454. One end portion of the pusher 460 may be seated on the bottom portion 454.

Referring to the pusher 460, the pusher 460 may be disposed to surround the guide fence 453. On the outer circumferential surface of the pusher 460 facing the guide fence 453, the driven cam 466 corresponding to the driving cam 456 may be provided. While the driven cam 466 moves on the driving cam 456, the pusher 460 may move the clutch 410.

A pushing body 462 having an annular shape or a short tubular shape may constitute the framework of the pusher 460. The pushing body 462 may have an inner diameter larger than the outer diameter of the guide fence 453. The pushing body 462 may be configured to surround the second driving hole 461. The second driving hole 461 of the pushing body 462 and the first driving hole 451 of the driving member 450 may be connected to form a continuous path.

The inner circumferential surface of the pushing body 462 may be provided with the driven cam 466. The driven cam 466 may be a part that moves on the driving cam 456 and may have a structure protruding radially inward from the inner circumferential surface of the pushing body 462. The driven cam 466 may extend along the circumferential direction of the pushing body 462. The detailed structure of the driven cam 466 will be described again below.

The pushing body 462 may include the anti-rotation protrusion part 469a. The anti-rotation protrusion part 469a may prevent the pusher 460 from rotating. The anti-rotation protrusion part 469a may be inserted into a rotation-preventing recess 425a formed in the drive casing C. The anti-rotation protrusion part 469a may be inserted into the rotation-preventing recess to be interfered with in the direction of rotation. Accordingly, the anti-rotation protrusion part 469a may move only in upward and downward directions along the rotation-preventing recess, that is, in the front-rear direction.

The anti-rotation protrusion part 469a may protrude radially outward from the edge of the pushing body 462. In this embodiment, the anti-rotation protrusion part 469a may be provided on a lower end of the pushing body 462 facing rearward. The anti-rotation protrusion part 469a may include a plurality of anti-rotation protrusion parts 469a provided to be spaced apart from each other along the outer circumferential surface of the pushing body 462.

For reference, in FIG. 19, reference numeral 469 denotes a guide rib 469 protruding radially outward along the outer circumferential surface of the pushing body 462. The guide rib 469 may have an arc shape surrounding the outer circumferential surface of the pushing body 462. The guide rib 469 may reduce a gap between the pusher 460 and the inner body part 425 of the first casing 420. In this case, when the pusher 460 moves in the front-rear direction along the axial direction, the pusher 460 may move stably without tilting to one side.

Referring to FIG. 15, a state in which the clutch driving device 400 is assembled is illustrated. For ease of understanding, the first casing 420 is represented by a dotted line in FIG. 15. When the pusher 460 is coupled to the driving member 450, the guide fence 453 of the driving member 450 may be covered by the pusher 460 and thus become invisible. In this state, when the driving member 450 rotates, the pusher 460 may move forward and backward (upward and downward in the drawing). At this time, due to the rotation-preventing recess 425a, the pusher 460 may be prevented from rotating and may perform only rectilinear movement.

More specifically, even when the pusher 460 covers the guide fence 453 of the driving member 450, the driving gear 455 of the driving member 450 may be exposed in the radial direction. The exposed driving gear 455 may be engaged with the first transmission gear 443a. Accordingly, the rotational force of the driving source 441 may be transmitted to the driving gear 455. In this case, although the sensing fence 459 is provided on the driving member 450, the driving gear 455 may have a different axial height from the sensing fence 459, and thus the sensing fence 459 may not interfere with the engagement between the driving gear 455 and the first transmission gear 443a.

For reference, in FIG. 15, the clutch 410 is omitted. The clutch 410 may move from the upper side to the lower side in the drawing and be fitted into the central portion of the clutch driving device 400. In this state, the pushing surface 462a of the pusher 460, which is exposed forward, may push the clutch 410 forward.

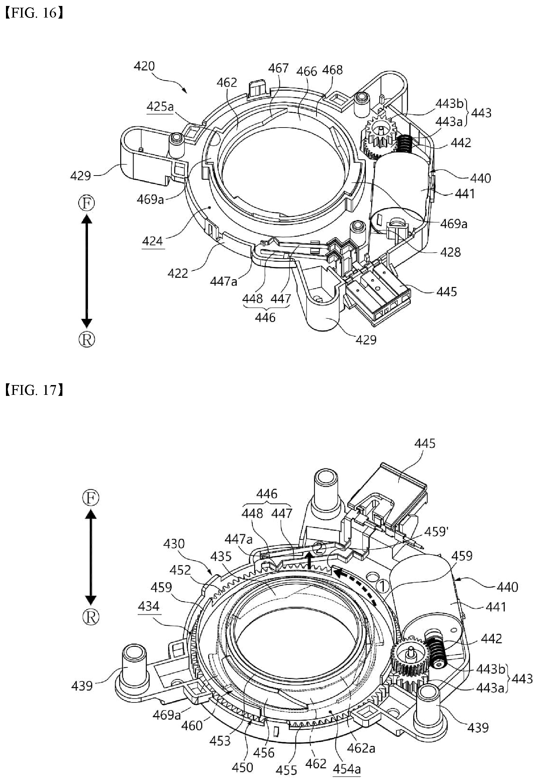

FIG. 16 illustrates the clutch driving device 400 with the second casing 430 and the driving member 450 removed, as viewed from a direction opposite to that of FIG. 15. As shown, an inner circumferential surface of the pusher 460 may be provided with the driven cam 466, and the driven cam 466 may be exposed radially inward. In FIG. 16, the anti-rotation protrusion part 469a of the pusher 460 is shown to be fitted into the rotation-preventing recess 425a. As illustrated, in this embodiment, two anti-rotation protrusion parts 469a are provided on the outer circumferential surface of the pusher 460 with a 180-degree phase difference from each other. In this state, the pusher 460 may move forward (downward in the drawing). The omitted second casing 430 may support the pusher 460 from the rear.

FIG. 17 illustrates a state in which the first casing 420 is removed and the driving member 450 is represented by a dotted line. When the driving member 450 is rotated in the direction of arrow ① by the driving source 441, the driving cam 456 may push the driven cam 466. Accordingly, the pusher 460 may move in the direction of arrow ②. During this movement of the pusher 460, the pusher 460 may push the clutch 410 in the axial direction, thereby switching the clutch 410 into the disengaged state.

In FIG. 17, the first switching terminal 447 is in a state of not interfering with the sensing fence 459. The sensing interference portion 447a of the first switching terminal 447 may be disposed in the sensing avoidance portion 452a, and in this case, the sensing interference portion 447a of the first switching terminal 447 may protrude radially inward from the driving member 450. When the driving member 450 continues to rotate in the direction of arrow ①, the section of the sensing avoidance portion 452a may end, and the sensing fence 459 may interfere with the sensing interference portion 447a, thereby pushing the sensing interference portion 447a radially outward. This process will be described again below.

In FIG. 18, the clutch 410, the driving member 450, and the pusher 460 are shown separated from each other. Although not shown, an elastic member S may be arranged below the clutch 410 on the basis of FIG. 18, and may push the clutch 410 rearward (upward in the drawing). Accordingly, the clutch 410 may be basically in a state of being pushed rearward. Here, the state in which the clutch 410 is pushed rearward may be the same as a state in which the clutch 410 is coupled to the coupler 350.

As shown in FIG. 18, the diameter of the contact support portion 413 of the clutch 410 may be larger than the outer diameter of the pusher 460. At the same time, the outer diameter of the clutch body 412 may be smaller than the second driving hole 461 of the pusher 460. In this case, the clutch body 412 may be inserted into the second driving hole 461, but the contact support portion 413 may be held on the edge of the second driving hole 461. Accordingly, the contact support portion 413 may be pressed against the surface of the pusher 460 corresponding to the edge of the second driving hole 461.

As shown in FIG. 19, the driving member 450 and the pusher 460 are illustrated to be separated from each other. As is seen, the driving cam 456 may be provided on the outer circumferential surface of the guide fence 453 along the circumferential direction of the guide fence 453. In this embodiment, the two driving cams 456 may be provided on the outer circumferential surface of the guide fence 453 with a phase difference of 180 degrees. Alternatively, the driving cams 456 may be configured as one or at least three driving cams.

The driving cam 456 may include a plurality of sections having lengths in the axial direction that vary along the circumferential direction of the driving member 450. Since the driving cam 456 includes the plurality of sections having lengths in the axial direction that vary along the circumferential direction of the driving member 450, the axial movement distance of the pusher 460 may vary according to the rotation angle of the driving member 450.

The plurality of sections may include a pushing release section RS that extends along the circumferential direction of the driving cam 456. The pushing release section RS may be regarded as a section where the driving cam 456 is omitted. When the driven cam 466 enters the pushing release section RS, an axial relative distance between the pusher 460 and the driving member 450 may be shortest. That is, when the driven cam 466 is disposed in the pushing release section RS, the driving member 450 may not push the pusher 460 forward.

The plurality of sections may include a pushing operation section OS. The pushing operation section OS may extend along the circumferential direction of the driving cam 456. The pushing operation section OS may be defined as a section in which the driving cam 456 is formed on the guide fence 453. The pushing operation section OS may protrude further in the axial direction toward the front side opposite to the rotor 230 than the pushing release section RS, so that the pushing operation section OS may push the pusher 460 forward.

The pushing operation section OS may include a pushing drive portion 457a that pushes the pusher 460 in a direction spaced apart from the rotor 230. The pushing drive portion 457a, as a part of the driving cam 456, may extend in an inclined direction along the circumferential direction. The pushing drive portion 457a may form an inclined path from the bottom portion 454 of the driving member 450 to a pushing maintaining portion 458, which will be described below. The pushing drive portion 457a may be referred to as a first cam portion, and the pushing maintaining portion 458 may be referred to as a second cam portion.

The pushing drive portion 457a may have height increasing gradually from the pushing release section RS toward the pushing maintaining portion 458 along a direction opposite to the rotational direction of the driving cam 456. The driven cam 466 may move on the pushing drive portion 457a in a gradually rising direction, that is, toward the front. In this case, during the movement of the driven cam 466 on the driving cam 456, force required to overcome the elastic force of the elastic member S may be distributed.

The pushing drive portion 457a may have a structure of a continuous curved surface or an inclined surface connecting a starting point 457a' of the pushing drive portion 457a with an ending point 457a" of the pushing drive portion 457a. In this embodiment, the section between the starting point 457a' of the pushing drive portion 457a and the ending point 457a" of the pushing drive portion 457a may have a continuous inclined surface structure. In another example, the pushing drive portion 457a may be composed of a plurality of portions having different inclination angles.

The pushing operation section OS may include the pushing maintaining portion 458 that maintains the pusher 460 to be spaced apart from the rotor 230. The pushing maintaining portion 458 may include a starting point and an ending point, and may form a continuous flat surface structure between the starting point and the ending point. In this case, a starting point 457a" of the pushing maintaining portion 458 may be the same as the ending point 457a" of the pushing drive portion 457a. An ending point 457b' of the pushing maintaining portion 458 may be the same as a starting point 457b' of an unlocking drive portion 457b to be described later.

The pushing maintaining portion 458, unlike the pushing drive portion 457a, may not extend in the inclined direction along the circumferential direction but may have a predetermined height with respect to the axial direction. In this case, during the process in which a release maintaining portion 468 of the driven cam 466 moves along the pushing maintaining portion 458 in the circumferential direction, the axial movement of the pusher 460 may not occur. In another example, the pushing maintaining portion 458 may not have a predetermined height with respect to the axial direction but may have an inclined structure. However, the inclination angle of the pushing maintaining portion 458 may be gentler than the inclination angle of the pushing drive portion 457a.

The pushing maintaining portion 458 may extend in the circumferential direction of the driving member 450. The pushing maintaining portion 458 may have a maximum distance in a direction opposite to the rotor 230 with respect to the axial direction. That is, when the release maintaining portion 468 of the driven cam 466 is disposed on the pushing maintaining portion 458, the pusher 460 may be in a state of pushing the clutch 410 away from the rotor 230 to the maximum extent, that is, in the disengaged state.

The pushing operation section OS may include the unlocking drive portion 457b. When the clutch 410 is switched from the disengaged state to the engaged state, the driven cam 466 may move on the unlocking drive portion 457b. The driven cam 466 may move on the unlocking drive portion 457b and may enter the pushing release section RS.

The unlocking drive portion 457b may be formed in an inclined direction along the circumferential direction of the driving member 450. More specifically, the unlocking drive portion 457b may have height decreasing gradually toward the pushing release section RS along the rotational direction of the driving cam 456. Such an inclined structure may distribute the elastic force of the elastic member S when the pusher 460 is released from the state of pushing the clutch 410 forward. The inclined structure of the unlocking drive portion 457b may prevent the pusher 460 from colliding with the driving member 450 at high speed due to the elastic force of the elastic member S.

The unlocking drive portion 457b may be provided opposite to the pushing drive portion 457a with the pushing maintaining portion 458 placed therebetween. That is, with the pushing maintaining portion 458 as a center, the unlocking drive portion 457b may have a position symmetrical to that of the pushing drive portion 457a. In this case, with reference to FIG. 19, the driven cam 466 may ascend along the pushing drive portion 457a, enter the pushing maintaining portion 458, and then descend along the unlocking drive portion 457b.

In this way, the pushing operation section OS, that is, the pushing drive portion 457a, the pushing maintaining portion 458, and the unlocking drive portion 457b, which constitute the driving cam 456, may form a continuous guide path for raising, maintaining, and lowering the pusher 460.

The pushing release section RS and the pushing operation section OS may be repeated along the circumferential direction of the driving cam 456. In this case, when the driving member 450 continuously rotates in one direction, the pusher 460 may alternately switch the clutch 410 between the disengaged state and the engaged state, and the driving source 441 may be required to rotate the driving member 450 only in a single direction.

The circumferential length of the pushing drive portion 457a may be greater than the circumferential length of the unlocking drive portion 457b. When the pushing drive portion 457a forms a longer section than the unlocking drive portion 457b, an external force required to switch the clutch 410 to the disengaged state, which requires a greater force to move the clutch 410, may be distributed. At the same time, the relatively shorter unlocking drive portion 457b may more quickly switch the clutch 410 from the disengaged state to the engaged state.

Looking at the driven cam 466, the driven cam 466 may be provided on the inner circumferential surface of the pusher 460. The driven cam 466 may be disposed along the circumferential direction on the inner circumferential surface of the pusher 460. In this embodiment, two driven cams 466 may be provided on the inner circumferential surface of the pusher 460 with a 180-degree phase difference. In another example, the driven cam 466 may be configured as one or at least three driven cams.

The driven cam 466 may include a clutch locking section SS extending along the circumferential direction. The clutch locking section SS may be a section in which the pusher 460 pushes the clutch 410 so that the clutch 410 is engaged with the coupler 350. In other words, the clutch locking section SS may be regarded as a section of the driven cam 466 in which a clutch release section CS is omitted.

The driven cam 466 may be formed to have a shorter protruding length in the axial direction in the clutch locking section SS than in the clutch release section CS. Accordingly, in the clutch locking section SS, the pusher 460 may be disposed axially closer to the driving member 450, and the state in which the pusher 460 pushes the clutch 410 in the axial direction may also be released.

The clutch release section CS may extend along the circumferential direction of the driven cam 466. The clutch release section CS may protrude further in the axial direction toward the rotor 230 than the clutch locking section SS. When the clutch release section CS is guided by the pushing operation section OS of the driving cam 456, the pusher 460 may move the clutch 410 in a direction spaced apart from the rotor 230.

Looking at the structure of the clutch release section CS, as shown in FIG. 19, the clutch release section CS may include a release drive portion 467a that gradually increases in height along the circumferential direction from the clutch locking section SS toward the release maintaining portion 468. The release drive portion 467a may vary in height along the circumferential direction. The release drive portion 467a may be a portion that ascends along the pushing drive portion 457a of the driving member 450. For this purpose, the release drive portion 467a may be disposed to face the pushing drive portion 457a in the circumferential direction.

The release drive portion 467a may have a structure of a continuous curved surface or inclined surface connecting a starting point 467a' of the release drive portion 467a with an ending point 467a" of the release drive portion 467a. In this embodiment, the section between the starting point 467a' of the release drive portion 467a and the ending point 467a" of the release drive portion 467a may have a continuous inclined surface structure. In another example, the release drive portion 467a may be composed of a plurality of portions having different inclination angles.

In this embodiment, the driving cam 456 may include the pushing drive portion 457a having a first inclination angle relative to the circumferential direction of the driving member 450, and the release drive portion 467a may have the same inclination angle as the first inclination angle relative to the circumferential direction of the pusher 460. In another example, the pushing drive portion 457a and the release drive portion 467a may have inclination angles different from each other.

The release drive portion 467a may be parallel to the pushing drive portion 457a of the driving cam 456. In this case, the release drive portion 467a may move up on the pushing drive portion 457a of the driving cam 456 while in surface contact with the pushing drive portion 457a. Accordingly, elastic force exerted by the elastic member S may be more widely distributed, enabling the pusher 460 to move stably in the axial direction.

The clutch release section CS may include the release maintaining portion 468. The release maintaining portion 468 may extend in the circumferential direction of the pusher 460 and may have a maximum distance toward the rotor 230 with respect to the axial direction. Unlike the release drive portion 467a, the release maintaining portion 468 may not extend in an inclined direction along the circumferential direction but may have a predetermined height with respect to the axial direction. In this case, during the process in which the release maintaining portion 468 of the driven cam 466 moves in the circumferential direction along the pushing maintaining portion 458, the axial movement of the pusher 460 may not occur. In another example, the release drive portion 467a may not have a predetermined height with respect to the axial direction but may have an inclined structure. However, the inclination angle of the release drive portion 467a may be formed more gently than that of the release drive portion 467a.

The release maintaining portion 468 may extend in the circumferential direction of the pusher 460. The release maintaining portion 468 may have a maximum distance in a direction opposite to the rotor 230 with respect to the axial direction. That is, when the release maintaining portion 468 of the driven cam 466 is disposed on the pushing maintaining portion 458, the pusher 460 may be in a state of pushing the clutch 410 away from the rotor 230 to the maximum extent.

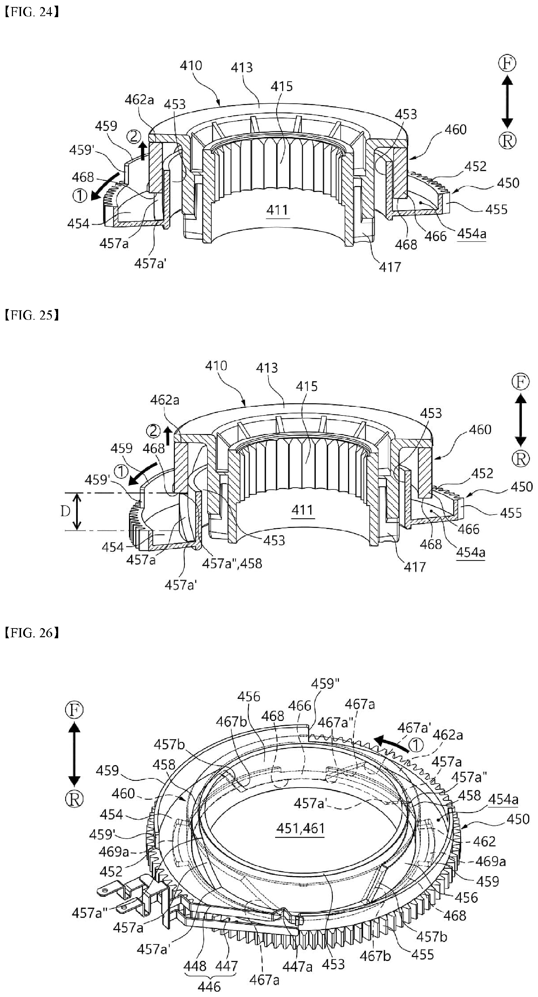

The release maintaining portion 468 may be parallel to the pushing maintaining portion 458 of the driving cam 456. In this case, the release maintaining portion 468 may be stably supported while being in surface contact with the pushing maintaining portion 458. This state is illustrated in FIG. 25.

The clutch release section CS may further include a locking drive portion 467b. The locking drive portion 467b may be provided opposite to the pushing drive portion 457a with the release maintaining portion 468 placed therebetween. That is, with the release maintaining portion 468 as a center, the locking drive portion 467b may have a position symmetrical to that of the release drive portion 467a. In this case, with reference to FIG. 19, the driven cam 466 may ascend along the pushing drive portion 457a, enter the pushing maintaining portion 458, and then descend along the unlocking drive portion 457b via the locking drive portion 467b.

The locking drive portion 467b may have a structure in which its height gradually decreases toward the clutch locking section SS. In order to move the clutch 410 from the disengaged state to the engaged state, the locking drive portion 467b may move on the unlocking drive portion 457b of the driving cam 456. The locking drive portion 467b may have the same inclination angle as the unlocking drive portion 457b so that the locking drive portion 467b and the unlocking drive portion 457b may relatively move in surface contact with each other.

The release drive portion 467a may have a greater length in the circumferential direction of the pusher 460 than the locking drive portion 467b. When the release drive portion 467a forms a longer section than the locking drive portion 467b, an external force required to switch the clutch 410 to the disengaged state, which requires a greater force to move the clutch 410, may be distributed. At the same time, the relatively shorter locking drive portion 467b may more quickly switch the clutch 410 from the disengaged state to the engaged state.

The length of the pushing release section RS of the driving member 450 in the circumferential direction of the driving member 450 may be longer than the length of the release maintaining portion 468 of the pusher 460 in the circumferential direction of the pusher 460. When the pushing release section RS is longer than the release maintaining portion 468, the release maintaining portion 468 may move a further distance along the pushing release section RS. This movement distance of the release maintaining portion 468 along the pushing release section RS may serve as a section for compensating for an overrun in the event that the driving member 450 is not precisely controlled and the overrun occurs.

When the release maintaining portion 468 enters the pushing release section RS of the driving member 450, the driving member 450 and the pusher 460 may have a minimum separation distance therebetween in the axial direction. When the release maintaining portion 468 enters the pushing release section RS, the driving member 450 and the pusher 460 may be disposed to be closest to each other in the axial direction. When the release maintaining portion 468 enters the pushing release section RS, as shown in FIG. 23, the release maintaining portion 468 of the pusher 460 may be in contact with the bottom portion 454 of the driving member 450, and the driving member 450 and the pusher 460 may be the closest in the axial direction. Accordingly, the clutch 410 may be switched to the engaged state.

From the point at which the release maintaining portion 468 enters the pushing release section RS, the minimum separation distance may be maintained while the driving member 450 further rotates by a margin angle. In this embodiment, the release maintaining portion 468 may further rotate by a predetermined distance within the pushing release section RS. In this case, the angle by which the release maintaining portion 468 further rotates within the pushing release section RS may be the margin angle. Such a margin angle may compensate for an overrun that occurs when the driving member 450 is not precisely controlled. For example, even if the driving member 450 does not immediately stop at a moment at which the release maintaining portion 468 enters the pushing release section RS and rotates further, the release maintaining portion 468 may rotate within the pushing release section RS, so the release drive portion 467a may be prevented from ascending along the pushing drive portion 457a again.

The circumferential length of the pushing release section RS of the driving member 450 may be greater than the circumferential length of the clutch release section CS of the pusher 460. In this case, even when the entire clutch release section CS, that is, the entire driven cam 466, is disposed within the pushing release section RS, a clearance distance may be secured between the driven cam 466 and the pushing release section RS. This clearance distance may compensate for the overrun of the driving member 450.

The circumferential length of the pushing operation section OS of the driving member 450 may be greater than the circumferential length of the clutch release section CS of the pusher 460. That is, the total circumferential distance of the driving cam 456 may be greater than the total circumferential distance of the driven cam 466. When the circumferential length of the driving cam 456 is longer, the driven cam 466 may secure a longer guiding distance by being guided by the driving cam 456. Accordingly, after the release maintaining portion 468 enters the disengaged state in which the release maintaining portion 468 is seated on the pushing maintaining portion 458, it is possible to prevent the disengaged state from being switched back to the engaged state when the driving member 450 does not immediately stop and an overrun occurs.

Looking at FIG. 20, the rotational direction of the driving member 450 is indicated by an arrow. The driving member 450 may continuously rotate in a first direction (the direction of the arrow) as the driving gear 455 receives rotational force from the driving source 441. In this embodiment, the driving member 450 may rotate and stop only in the first direction. That is, the driving source 441 may not be required to rotate the driving member 450 in a second direction which is a direction opposite to the first direction. This is because the pushing drive portion 457a, the pushing maintaining portion 458, and the unlocking drive portion 457b included in the pushing operation section OS of the driving member 450 are continuously formed along the circumferential direction, thereby defining a lifting path of the pusher 460.

As shown in FIG. 20, the sensing avoidance portion 452a may be formed between end portions 459' and 459" of two sensing fences 459 spaced apart from each other. The sensing fences 459 and the sensing avoidance portions 452a may be alternately arranged along the circumferential direction on the edge of the driving member 450.

As shown in FIG. 21, the driven cam 466 of the pusher 460 may be composed of a plurality of portions having different heights along the axial direction of the pusher 460. As described above, the release drive portion 467a and the locking drive portion 467b may be provided on opposite sides of the release maintaining portion 468. As illustrated, in this embodiment, the release drive portion 467a may have a gentler inclination angle than the locking drive portion 467b.

The release drive portion 467a may include the starting point 467a' of the release drive portion 467a and the ending point 467a" of the release drive portion 467a. The starting point 467a' and the ending point 467a" of the release drive portion 467a may be in close contact with or face the starting point 457a' and the ending point 457a" of the pushing drive portion 457a, respectively. When the release drive portion 467a ascends along the pushing drive portion 457a, the starting point 467a' of the release drive portion 467a may be spaced apart from the pushing drive portion 457a, but the ending point 467a" of the release drive portion 467a may move on the inclined surface of the pushing drive portion 457a. At the moment when the ending point 467a" of the release drive portion 467a comes into contact with the ending point 457a" of the pushing drive portion 457a, that is, when the pusher 460 is seated on the pushing maintaining portion 458, the pusher 460 may have a maximum protruding distance thereof.

As shown in FIG. 22, the rotation of the driving member 450 and the sensing switch 446, which operates in association with the rotation of the driving member 450, are illustrated in a plan view. When the gear 442 of the driving source 441 rotates in the direction of arrow ①, the plurality of transmission gears 443 may rotate in the direction of arrow ② in conjunction with the rotation of the gear 442. The driving gear 455, which is engaged with the plurality of transmission gears 443, may be rotated in the direction of arrow ③ by the plurality of transmission gears 443. In this case, the rotational center of the driving gear 455 may correspond to the center of the first driving hole 451 formed at the central portion of the driving member 450.

When the driving gear 455 rotates, the driving cam 456 may push the driven cam 466 upward in the axial direction to elevate the pusher 460, or conversely, lower the pusher 460 in the axial direction. As previously described, the downward movement of the pusher 460 may be performed by the elastic force of the elastic member S.

Along with the movement of the pusher 460, the sensing switch 446 may operate in conjunction with the driving member 450 to detect the movement of the pusher 460. As shown in FIG. 22, the sensing fence 459 of the driving member 450 may rotate with the rotation of the driving member 450 and approach the sensing switch 446. More specifically, the sensing interference portion 447a provided on the first switching terminal 447 of the two switching terminals 447 and 448 constituting the sensing switch 446 may interfere with the sensing fence 459. FIG. 22 shows that the sensing interference portion 447a is disposed in the sensing avoidance portion 452a formed between two adjacent sensing fences 459, representing a state before the sensing interference portion 447a is radially pressed (in the direction of arrow ④) by the sensing fence 459.

When the sensing interference portion 447a is pressed by the sensing fence 459, the two switching terminals 447 and 448 may be in electrical contact with each other. This state is illustrated in FIG. 29. When the two switching terminals 447 and 448 are electrically contacted and the sensing switch 446 is turned on, a controller may stop the driving of the driving source 441. As a result, the rotation of the driving member 450 is stopped, and the pusher 460 may maintain its current position. For example, the pusher 460 may remain at a position in which it is protruded by the maximum distance in the axial direction, thereby bringing the clutch 410 into the disengaged state.

The controller may cut off power to the driving source 441 and stop the rotation of the driving member 450 when the sensing switch 446 is turned on. Alternatively, when the sensing switch 446 is turned off, the controller may cut off power to the driving source 441 and stop the rotation of the driving member 450. That is, the controller may stop the driving of the driving source 441 when the sensing switch 446 changes from the on state to the off state, or from the off state to the on state.

FIGS. 23 to 25 sequentially illustrate a process in which the driving member 450 according to the first embodiment of the present disclosure rotates to raise the pusher 460. FIG. 23 shows a state in which the pusher 460 is not protruded in the axial direction from the driving member 450. The release maintaining portion 468 of the pusher 460 may contact the bottom portion 454 of the driving member 450, and thus the driving member 450 and the pusher 460 may be positioned closest to each other in the axial direction. In this case, since the pusher 460 does not push the clutch 410 upward in the axial direction, the clutch 410 may be engaged with the coupler 350, and the laundry treating apparatus may be in the spin-drying mode.

When the driving member 450 rotates, the state shown in FIG. 24 is achieved. When the driving member 450 rotates, the pushing drive portion 457a provided on the driving cam 456 of the driving member 450 may push the driven cam 466 upward. Accordingly, the release maintaining portion 468 of the pusher 460 may be spaced apart from the bottom portion 454 of the driving member 450. For reference, FIG. 24 illustrates a state in which the starting point 457a' of the pushing drive portion 457a pushes the driven cam 466 upward so that the pusher 460 is moved forward, representing a state in which the pusher 460 has moved by half of its maximum movement distance D (see FIG. 25).

In this state, when the driving member 450 further rotates in the same direction, as shown in FIG. 25, the pusher 460 may be moved forward by the maximum movement distance D, and the clutch 410 may also be moved forward by the pusher 460. More specifically, as the driving member 450 rotates in the direction of arrow ①, the pusher 460 may be raised in the direction of arrow ②. In this case, the release maintaining portion 468 of the pusher 460 may come into contact with the ending point 457a" of the pushing drive portion 457a, which is also the starting point 457a" of the pushing maintaining portion 458. That is, the release maintaining portion 468 of the pusher 460 may enter the pushing maintaining portion 458.

FIGS. 26 to 29 sequentially illustrate a process in which the driving member 450 according to the first embodiment of the present disclosure rotates to raise the pusher 460. FIGS. 26 to 29 stepwise show the driving member 450 continuously rotating in a first direction (the direction of arrow ①). For reference, in FIG. 26, the driving cam 456 and the driven cam 466 are spaced apart from each other, while in FIG. 27, the driving cam 456 is in contact with the driven cam 466. FIG. 28 shows a state in which the driving cam 456 pushes the driven cam 466 forward by the maximum distance, and FIG. 29 illustrates a state in which the driving member 450 has further rotated from the state of FIG. 28.

Looking at FIG. 26, the pushing drive portion 457a of the driving cam 456 and the release drive portion 467a of the driven cam 466 are circumferentially spaced apart from each other. Looking at the lower side of arrow ①, the release drive portion 467a of the driven cam 466 is spaced in a counterclockwise direction from the pushing drive portion 457a of the driving cam 456. Accordingly, in order for the pushing drive portion 457a of the driving cam 456 to push up the release drive portion 467a of the driven cam 466, the driving member 450 may be required to rotate in the counterclockwise direction (the direction of arrow ①).

Looking at FIG. 27, the pushing drive portion 457a of the driving cam 456 and the release drive portion 467a of the driven cam 466 are illustrated to face each other. That is, the pushing drive portion 457a of the driving cam 456 and the release drive portion 467a of the driven cam 466 are in close contact with each other. However, the pushing drive portion 457a has not yet pushed the release drive portion 467a upward.

In this state, when the driving member 450 further rotates counterclockwise (in the direction of arrow ①), the state shown in FIG. 28 is achieved. The pushing drive portion 457a of the driving member 450 may move into a position under the release drive portion 467a of the pusher 460 and push the release drive portion 467a upward. During this process, the entire pusher 460 may be moved forward (in the direction of arrow ②). As the pusher 460 moves forward, the pushing surface 462a of the pusher 460 may also be moved forward. Although the clutch 410 is omitted in FIG. 28, the pushing surface 462a of the pusher 460 may move the clutch 410 into the disengaged state while in contact with the clutch 410.

Looking at FIG. 28, the release drive portion 467a of the pusher 460 moves up on the pushing drive portion 457a of the driving member 450, so that the ending point 457a" of the pushing drive portion 457a and the ending point 467a" of the release drive portion 467a may meet each other. In this case, the pusher 460 may be in a state of having moved by the maximum movement distance.

In this state, the driving member 450 may further rotate counterclockwise (the direction of arrow ①). In FIG. 29, it can be seen that the release maintaining portion 468 of the pusher 460 is seated on the pushing maintaining portion 458 of the driving member 450. The pushing maintaining portion 458 and the release maintaining portion 468 have the same height along the circumferential direction, and thus even if the driving member 450 further rotates counterclockwise (in the direction of arrow ①), there may be no change in the height of the pusher 460.

Since the pushing maintaining portion 458 and the release maintaining portion 468 are formed as corresponding flat surfaces, the pusher 460 may remain stably seated on the pushing maintaining portion 458. Even in this state, although the elastic member S applies a downward elastic force to the pusher 460 through the clutch 410, the pushing maintaining portion 458 and the release maintaining portion 468 may be in surface contact with each other, so that the pusher 460 may be stably supported by the driving member 450.

When the state shown in FIG. 28 is reached, the controller may stop the rotation of the driving member 450. However, if an overrun occurs, it may be considered that the driving member 450 and the pusher 460 reach the state shown in FIG. 29. In this embodiment, however, the contact section between the pushing maintaining portion 458 and the release maintaining portion 468 may be ensured to be sufficiently long, so that even if an overrun occurs, the pusher 460 may be prevented from descending again.

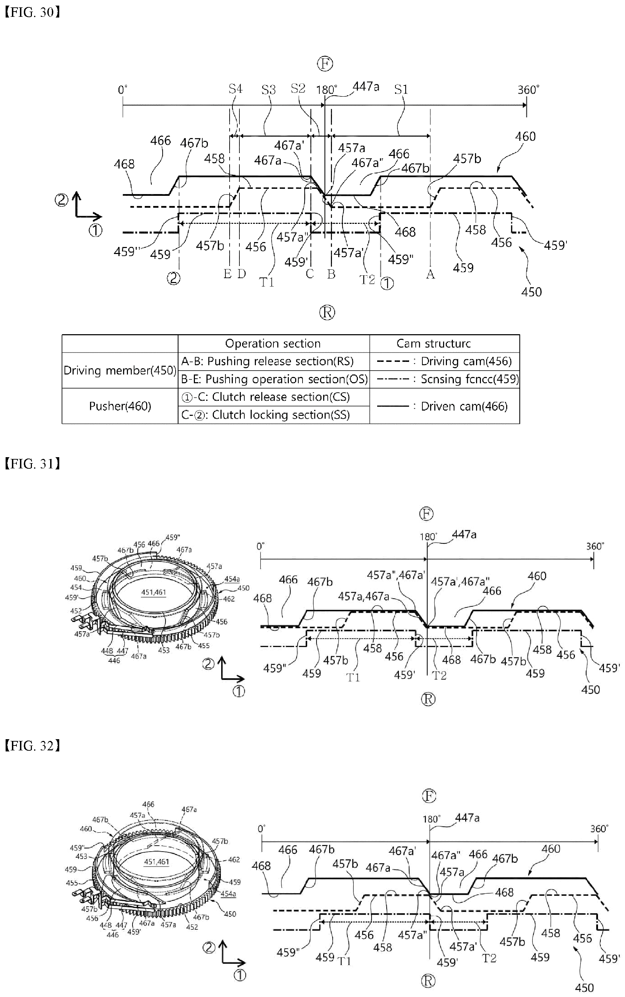

In FIG. 30, the driving cam 456 of the driving member 450, the sensing fence, and the driven cam 466 of the pusher 460 according to the first embodiment of the present disclosure are illustrated in a developed state. More specifically, FIG. 30 depicts the driving member 450 and the pusher 460 in a fully unfolded manner, so that the driving cam 456, the sensing fence 459, and the driven cam 466 are represented in a planar form. Arrow ① indicates the rotational direction of the driving member 450, and arrow ② indicates the front to which the pusher 460 moves.

In FIG. 30, the dotted line represents the driving cam 456 of the driving member 450, and the dash-dot line represents the sensing fence 459 of the driving member 450. The solid line represents the driven cam 466 of the pusher 460. For reference, FIG. 30 illustrates a state in which the pushing drive portion 457a pushes up the release drive portion 467a, thereby moving the pusher 460 forward (in the direction of arrow ②), wherein the pusher 460 has been moved by half of its maximum movement distance.

In FIG. 30, reference numeral "A" denotes the point at which the pushing release section RS of the driving member 450 begins, which corresponds to the lowest end of the unlocking drive portion 457b. Reference numeral "B" denotes the point at which the pushing release section RS of the driving member 450 ends, which corresponds to the starting point 467a' of the release drive portion 467a, which is the lowest end of the pushing drive portion 457a.

Reference numeral "C" denotes the ending point 467a" of the release drive portion 467a of the pusher 460, and reference numeral "D" denotes the point at which the pushing maintaining portion 458 of the driving member 450 ends and the unlocking drive portion 457b begins. Reference numeral "E" denotes the point at which the unlocking drive portion 457b ends, wherein a phase difference of 180 degrees may be present between the points A and E.

Reference numeral "①" denotes the upper end point of the locking drive portion 467b, which serves as one end portion of the clutch release section CS. Reference numeral "②" denotes the ending point of the clutch locking section SS, which is the same as the upper end point of the locking drive portion 467b. A phase difference of 180 degrees may be present between the points ① and ②.

Here, reference numerals A, B, D, and E denote points that move in the circumferential direction (the direction of arrow ①) in accordance with the rotation of the driving member 450, whereas C, ①, and ② denote points fixed irrespective of the rotation of the driving member 450. This is because C, ①, and ② denote points of the driven cam 466 provided on the pusher 460, and the pusher 460 does not rotate.

In FIG. 30, S1 corresponds to the section between A and B, which is the pushing release section RS. S2 corresponds to the section between B and C, which is a portion of the pushing operation section OS in which the pushing drive portion 457a is formed. S3 corresponds to the section between C and D, which forms a portion of the clutch locking section SS. S4 corresponds to the section between D and E, which is a portion of the pushing operation section OS in which the unlocking drive portion 457b is formed.

Here, the pushing operation section OS, in which the driving member 450 raises or lowers the pusher 460, may correspond to the section between B and E. In addition, the clutch release section CS, in which the pusher 460 raises or lowers the clutch 410, corresponds to the section between ① and C. The clutch locking section SS, in which the pusher 460 does not drive the clutch 410, corresponds to the section between C and ②.

In FIG. 30, T1 denotes the section in which the sensing avoidance portion 452a is formed, and T2 denotes the section in which the sensing fence 459 is provided. The center line indicating a 180-degree phase corresponds to the position of the sensing interference portion 447a of the first switching terminal 447. The position of the sensing interference portion 447a may be fixed. Accordingly, when the one end portion 459' of the sensing fence 459 reaches the 180-degree phase during the rotation of the driving member 450, the sensing fence 459 may be in contact with the sensing interference portion 447a. The sensing fence 459 may press the sensing interference portion 447a to turn on the sensing switch 446, and the controller may stop the rotation of the driving member 450.

Referring to FIGS. 31 to 34, the operations of the driving cam 456, the driven cam 466, and the sensing fence 459 will be described. First, looking at FIG. 31, the pushing drive portion 457a of the driving cam 456 and the release drive portion 467a of the driven cam 466 may be in close contact with each other. However, in FIG. 30, a state in which the driving cam 456 has not yet pushed up the driven cam 466 is illustrated. Furthermore, the one end portion 459' of the sensing fence 459 may be spaced apart in the circumferential direction (in the direction of arrow ①) from the sensing interference portion 447a.

FIG. 32 illustrates a state in which the driving member 450 has been rotated in the circumferential direction (the direction of arrow ①) from the state shown in FIG. 31. The pushing drive portion 457a of the driving member 450 may move into a position under the release drive portion 467a of the driven cam 466, thereby pushing up the pusher 460. As shown in FIG. 32, the ending point 457a" of the pushing drive portion 457a and the ending point 467a" of the release drive portion 467a may be brought into contact with each other. At this point, the pusher 460 may be moved in the axial direction, i.e., forward (in the direction of arrow ②) by a maximum separation distance.

In FIG. 32, the one end portion 459' of the sensing fence 459 is shown to be in contact with the sensing interference portion 447a. When the pusher 460 is moved in the axial direction by the maximum separation distance, the rotation of the driving member 450 may be required to stop, and thus at this point, the one end portion 459' of the sensing fence 459 may press the sensing interference portion 447a to turn on the sensing switch 446. In this embodiment, the driving member 450 may be required to be further rotated by a predetermined angle at the moment at which the one end portion 459' of the sensing fence 459 comes into contact with the sensing interference portion 447a, so that the surface of the sensing fence 459 may completely press the sensing interference portion 447a.

Accordingly, in this embodiment, the controller may stop the rotation of the driving member 450 at the point in time when the release maintaining portion 468 of the pusher 460 enters the pushing maintaining portion 458 of the driving member 450 (the state of FIG. 32). In another example, the controller may stop the rotation of the driving member 450 after the driving member 450 has further rotated by a predetermined angle or for a buffer period of time from the point in time when the release maintaining portion 468 of the pusher 460 enters the pushing maintaining portion 458 of the driving member 450. This may be possible since a margin angle is secured in this embodiment.

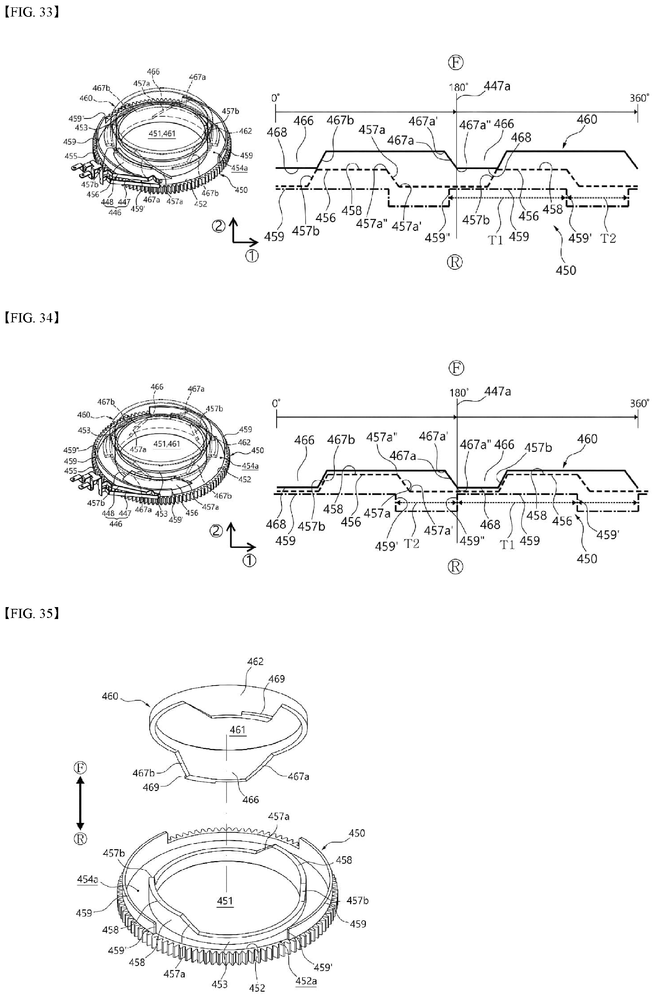

Looking at FIG. 33, the driving member 450 is in a state where it has been further rotated in the circumferential direction (the direction of arrow ①) from the position of the driving member 450 in FIG. 31. During this process, the release maintaining portion 468 of the pusher 460 may move along the pushing maintaining portion 458 of the driving member 450. In this case, since the release maintaining portion 468 and the pushing maintaining portion 458 have the same height in the circumferential direction (the direction of arrow ①), no axial movement of the pusher 460 may occur in this process.

In FIG. 33, the sensing fence 459 may be maintained to overlap with the sensing interference portion 447a. That is, at this point, the surface of the sensing fence 459 may press the sensing interference portion 447a, thereby turning on the sensing switch 446. Accordingly, the driving source 441 has already stopped operating, and the rotation of the driving member 450 may also be stopped.

However, the maximum movement distance may be maintained while the driving member 450 further rotates by a margin angle from the point in time when the release maintaining portion 468 completely rides onto the pushing maintaining portion 458, that is, from the point in time when the release maintaining portion 468 enters the ending point 457a" of the pushing drive portion 457a (the state thereof in FIG. 32). That is, the release maintaining portion 468 may be further rotated by a predetermined distance on the pushing maintaining portion 458.

For example, even if the driving source 441 stops at the moment when the pushing maintaining portion 458 is located at the position thereof in FIG. 32, the pushing maintaining portion 458 may have a margin distance to rotate further to the position thereof in FIG. 33. Even if an overrun of the driving member 450 occurs at the moment when the driving source 441 stops, and a slip occurs between the release maintaining portion 468 and the pushing maintaining portion 458, the maximum movement distance of the pusher 460 may be maintained. Accordingly, the disengaged state of the clutch 410 may be stably maintained. When the clutch 410 is disengaged from the coupler 350, the washing mode in which deceleration by the gear assembly 300 is achieved may be implemented.

Looking at FIG. 34, the driven cam 466 is illustrated to be in a state of descending along the unlocking drive portion 457b of the driving cam 456. That is, the locking drive portion 467b of the driven cam 466 may descend on the inclined surface of the unlocking drive portion 457b. Accordingly, the driven cam 466 and the pusher 460 may descend slowly by the inclined surface of the unlocking drive portion 457b, thereby reducing noise and vibration generated when the pusher 460 collides with the driving member 450.

In this process, the pusher 460 may descend in the axial direction toward the driving member 450. Accordingly, the clutch 410 may move rearward again and may be switched to the engaged state in which the clutch 41 is coupled to the coupler 350. The clutch 410 coupled to the coupler 350 may rotate at high speed together with the rotor 230, thereby implementing the spin-drying mode.

As shown in FIG. 34, at the moment when the pusher 460 is completely lowered in the axial direction, the end portion 459" of the sensing fence 459 may overlap with the sensing interference portion 447a, and at the same time, the sensing avoidance portion 452a may reach the sensing interference portion 447a. That is, at this point, the state in which the surface of the sensing fence 459 presses the sensing interference portion 447a to release the on state of the sensing switch 446, and the sensing switch 446 may be turned off. When the sensing switch 446 is turned off, the controller may recognize that the pusher 460 is in a completely lowered state, that is, that the pusher 460 has entered the pushing release section RS, and may stop the driving source 441. In this case, the rotation of the driving member 450 may stop, and the pusher 460 may not push the clutch 410, so that the engaged state may be maintained.

At this time, even if the driving member 450 further rotates by a margin angle while the release maintaining portion 468 has entered the pushing release section RS formed between two pushing maintaining portions 458, the engaged state may be maintained. That is, when the driving member 450 is not precisely controlled and overruns, the margin angle may compensate for the overrun of the driving member 450. This is possible because the length of the pushing release section RS of the driving member 450 (see section A-B in FIG. 30) based on the circumferential direction of the driving member 450 is longer than the length of the release maintaining portion 468 of the pusher 460 based on the circumferential direction of the pusher 460.

Accordingly, in this embodiment, the controller may stop the rotation of the driving member 450 at the point in time when the release maintaining portion 468 of the pusher 460 enters the pushing release section RS of the driving member 450 (the state thereof in FIG. 34). In another example, the controller may stop the rotation of the driving member 450 after the driving member 450 has further rotated by a predetermined angle or for a buffer period of time from the point in time when the release maintaining portion 468 of the pusher 460 enters the pushing release section RS of the driving member 450. As described above, this is possible since a margin angle is secured in this embodiment.

In summary, in this embodiment, the circumferential length of the pushing release section RS of the driving cam 456 may be longer than the circumferential length of the release maintaining portion 468 of the driven cam 466. When the release maintaining portion 468 enters the pushing release section RS, the axial separation distance between the pusher 460 and the driving member 450 may be minimized, so that the sensing switch 446 may be turned off. When the sensing switch 446 is thus turned off, the controller may control the clutch driving device 400 so that the rotation of the driving member 450 stops.

Meanwhile, the control of the controller may be precisely implemented through the position of the sensing switch 446. Looking at FIG. 32, the sensing interference portion 447a of the sensing switch 446 may be aligned with the starting point 467a" of the release maintaining portion 468 of the pusher 460 in the radial direction thereof. At the same time, the starting point 457a" of the pushing maintaining portion 458 formed in the pushing operation section OS of the driving cam 456 and the starting end portion 459' of the sensing fence 459 may be aligned in the radial direction of the driving member 450. In this case, when the driving member 450 rotates such that the release drive portion 467a has completely ridden onto the pushing drive portion 457a (the state thereof in FIG. 32), (i) the sensing interference portion 447a, (ii) the starting point 467a" of the release maintaining portion 468, (iii) the starting point 457a" of the pushing maintaining portion 458, and (iv) the starting end portion 459' of the sensing fence 459 may be aligned in the radial direction of the driving member 450.

In another example, the starting point 457a" of the pushing maintaining portion 458 formed in the pushing operation section OS of the driving cam 456 and the starting end portion 459' of the sensing fence 459 may be arranged to have a phase difference within 10 degrees with respect to the center of the driving member 450. In this embodiment, since a margin corresponding to the margin angle is present between the driving member 450 and the pusher 460, a phase difference within 10 degrees may be allowed between the starting point 457a" of the pushing maintaining portion 458 and the starting end portion 459' of the sensing fence 459.

When the clutch driving device 400 or the drum rotation device 100 is abnormally stopped, the controller may initialize the clutch driving device 400. When the position (rotational angle) of the driving member 450 is unknown due to an abnormal power-off, the controller may cause the driving member 450 of the clutch driving device 400 to make one full rotation. In this process, the sensing fence 459 may operate the sensing switch 446, and the controller may recognize the position of the driving member 450 through the on/off state of the sensing switch 446.

In another example, the clutch driving device 400 may be provided with a sensor such as a Hall sensor (not shown) in place of the sensing switch 446. By using the Hall sensor, a relative rotation angle between the driving member 450 and the pusher 460 may be measured, and on the basis of the measured value, the controller may control the rotation of the driving member 450. In another example, while moving in the axial direction, the pusher 460 may press two switch devices (not shown), which are spaced apart axially from each other, provided in the clutch driving device 400.

FIG. 35 illustrates the disassembled state of the driving member 450 and the pusher 460 constituting the drum rotation device 100 according to a second embodiment of the present disclosure. Focusing only on the structures that differ from the previously described embodiment, the driving cam 456 may be provided on the upper surface of the driving member 450 rather than on the side surface (outer circumferential surface) of the driving member 450. The driven cam 466 may be provided on the lower surface of the pusher 460 rather than on the side surface (outer circumferential surface) of the pusher 460. Referring to FIG. 35, the driven cam 466 may protrude downward from the lower surface of the pusher 460, and the driving cam 456 may protrude from the upper surface of the driving member 450 toward the driven cam 466. In another example, either the driving cam 456 or the driven cam 466 may be provided on the side surface of the driving member 450 or the pusher 460.

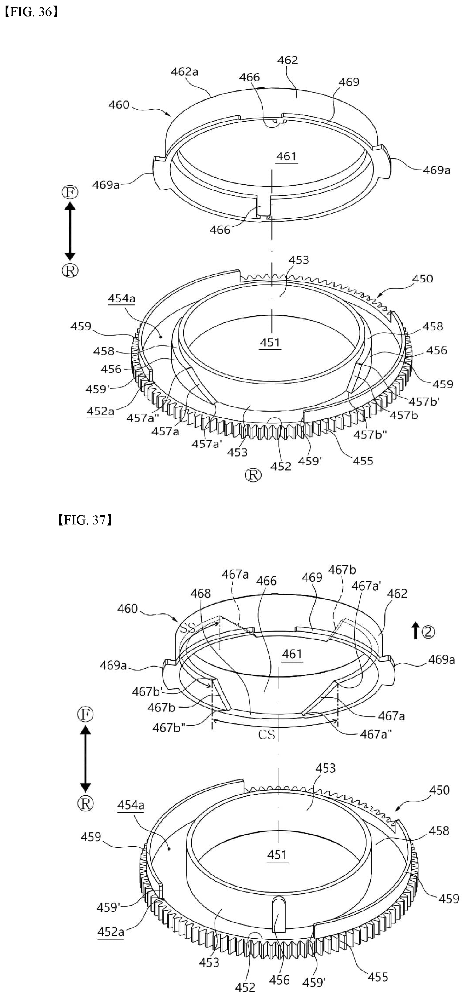

FIG. 36 illustrates the disassembled state of the driving member 450 and the pusher 460 constituting the drum rotation device 100 according to a third embodiment of the present disclosure. Focusing only on the structures that differ from the previously described embodiments, the driven cam 466 provided on the pusher 460 may have a structure simply extending in the axial direction, rather than having an axial height that varies along the circumferential direction thereof. The driven cam 466 may move on the driving cam 456 having an axial height changing along the circumferential direction thereof, thereby raising and lowering the pusher 460.

FIG. 37 illustrates the disassembled state of the driving member 450 and the pusher 460 constituting the drum rotation device 100 according to a fourth embodiment of the present disclosure. Focusing only on the structures that differ from the previously described embodiments, unlike the third embodiment, the driven cam 466 provided on the pusher 460 may have an axial height that varies along the circumferential direction. In contrast, the driving cam 456 may have a structure simply extending in the axial direction rather than having an axial height that varies along the circumferential direction. The driven cam 466 having an axial height that varies along the circumferential direction may move on the driving cam 456, thereby raising and lowering the pusher 460.

In another example, although not shown, the pusher 460 may be provided integrally with the clutch 410. In another example, the pusher 460 may be omitted, and the driven cam 466 may be provided directly on the outer or inner circumferential surface of the clutch 410, so that the clutch 410 may move on the driving cam 456 of the driving member 450.

The foregoing description is merely illustrative of the technical idea of the present disclosure, and it will be understood by those skilled in the art that various modifications and variations may be made without departing from the essential characteristics of the present disclosure. Accordingly, the embodiments disclosed herein are not intended to limit the technical idea of the present disclosure, but rather to explain it, and the scope of the technical idea of the present disclosure is not limited by such embodiments. The scope of protection of the present disclosure shall be interpreted on the basis of the following claims, and all technical ideas falling within the equivalent scope thereof shall be construed as being included within the scope of rights of the present disclosure.

## Claims

1. A drum rotation device comprising:
an output shaft coupled to a drum;
a motor comprising a stator and a rotor configured to rotate relative to the stator;
a gear assembly comprising a motor shaft connected to the motor and configured to transmit rotational force of the rotor to the output shaft;
a clutch configured to move in an axial direction of the motor shaft to be connected to the rotor and to control transmission of shifting drive force of the gear assembly to the output shaft; and
a clutch driving device configured to move the clutch in the axial direction,
wherein the clutch driving device comprises:
a driving source configured to provide rotational force,
a driving member having a rotational center concentric with the motor shaft and rotated by the driving source, and
a pusher configured to move in the axial direction in conjunction with the rotation of the driving member and to move the clutch in the axial direction.

2. The drum rotation device of claim 1, wherein the driving member is disposed in the clutch driving device such that movement thereof in the axial direction is restricted, and
the pusher is disposed in the clutch driving device such that relative rotation thereof with respect to the driving member is restricted.

3. The drum rotation device of claim 1, wherein the driving member and the pusher are disposed concentrically with each other.

4. The drum rotation device of claim 1, wherein each of the driving member and the pusher is disposed to surround the motor shaft.

5. The drum rotation device of claim 1, wherein the driving member is disposed closer to the motor than the pusher in the axial direction and moves the pusher away from the motor in the axial direction.

6. The drum rotation device of claim 1, wherein each of the driving member and the pusher is disposed to surround the motor shaft, and
the driving member and the pusher overlap each other in a radial direction.

7. The drum rotation device of claim 1, wherein the clutch, the driving member, and the pusher are disposed to overlap each other in a radial direction.

8. The drum rotation device of claim 1, wherein the driving member and the pusher are concentrically disposed to surround the motor shaft, and
the pusher is guided by an outer circumferential surface of the driving member and is moved in the axial direction.

9. The drum rotation device of claim 1, wherein the stator and the gear assembly are spaced apart from each other in the axial direction,
the clutch driving device is disposed between the stator and the gear assembly in the axial direction, and
the clutch driving device is coupled to each of the stator and the gear assembly.

10. The drum rotation device of claim 1, wherein a diameter of the clutch driving device is smaller than a diameter of the gear assembly and a diameter of the motor.

11. The drum rotation device of claim 1, wherein one the driving member and the pusher is provided with a guide cam portion having a length in the axial direction that varies in a circumferential direction thereof,
a remaining one of the driving member and the pusher is provided with a lifting guide part that is guided by the guide cam portion, and
when the driving member rotates, the lifting guide part moves in the axial direction on the guide cam portion.

12. The drum rotation device of claim 1, wherein the driving member is provided with a driving cam having a length in the axial direction that varies along a circumferential direction of the driving member,
the pusher is provided with a driven cam that is guided by the driving cam and has a length in the axial direction that varies along a circumferential direction of the pusher, and
when the driving member rotates, the driven cam moves in the axial direction along the driving cam.

13. The drum rotation device of claim 12, wherein the driving cam has a pushing drive portion having a first inclination angle relative to the circumferential direction of the driving member,
the driven cam has a release drive portion having the same inclination angle as the first inclination angle relative to the circumferential direction of the pusher, and
the pushing drive portion and the release drive portion are provided to face each other.

14. The drum rotation device of claim 1, wherein the gear assembly comprises:
a gear housing having a mounting space formed therein; and
a plurality of gears disposed in the mounting space and operating in conjunction with rotation of the motor shaft,
wherein the clutch driving device is fixed to the gear housing while surrounding the motor shaft.

15. The drum rotation device of claim 1, wherein the clutch driving device comprises:
a drive casing in which an operating space is formed and the driving source is disposed;
the driving member disposed in the operating space and rotated by receiving rotational force from the driving source; and
the pusher having at least a portion disposed in the operating space and configured to move in the axial direction.

16. The drum rotation device of claim 15, wherein a portion of the pusher moves into and out of the operating space along the axial direction.

17. The drum rotation device of claim 15, wherein the drive casing is provided with a rotation-preventing portion that interferes with the pusher in a circumferential direction of the pusher,
wherein the rotation-preventing portion is continuously formed along the moving direction of the pusher.

18. The drum rotation device of claim 15, wherein a rotation-preventing recess recessed in a radial direction is formed in the drive casing, and
the pusher is provided with an anti-rotation protrusion part protruding in the radial direction and inserted into the rotation-preventing recess,
wherein the rotation-preventing recess extends along the moving direction of the pusher.

19. The drum rotation device of claim 15, wherein a pusher movement hole through which the pusher moves into and out of the drive casing is open in the drive casing,
wherein a radius of the pusher movement hole is smaller than a radial distance between a center of the pusher and an end of the anti-rotation protrusion part.

20. The drum rotation device of claim 1, wherein the driving source is disposed to be spaced apart from each of the driving member and the pusher in a radial direction of the clutch driving device,
a radial distance between the rotational center of the driving member and the driving source is shorter than a radial distance between a rotational center of the gear assembly and a radial end of the gear assembly, and
the radial distance between the rotational center of the driving member and the driving source is shorter than a radial distance between a rotational center of the motor and an edge of the motor.

21. The drum rotation device of claim 1, wherein the driving member comprises:
a ring-shaped drive body;
a driving gear provided on a surface of the drive body along a circumferential direction of the drive body and configured to be engaged with the driving source to rotate; and
a driving cam provided on the surface of the drive body along a circumferential direction of the driving member and having a distance in the axial direction that varies along the circumferential direction.

22. The drum rotation device of claim 21, wherein the driving gear and the driving cam are respectively provided on different surfaces of the drive body, and
a radial distance between the rotational center of the driving member and the driving gear is greater than a radial distance between the rotational center of the driving member and the driving cam.

23. The drum rotation device of claim 1, wherein the driving member has a guide fence provided along a circumferential direction of the driving member,
a driving cam having a distance in the axial direction that varies along a circumferential direction of the guide fence is provided on a surface of the guide fence,
the pusher is disposed to surround the guide fence, and
a driven cam corresponding to the driving cam is provided on an outer circumferential surface of the pusher facing the guide fence.

24. The drum rotation device of claim 1, wherein the pusher and the clutch respectively have a pushing surface and a contact support portion formed to face each other in the axial direction,
wherein the pushing surface and the contact support portion are maintained in surface contact with each other.

25. The drum rotation device of claim 1, wherein an elastic member tensioned in the axial direction is provided between the gear assembly and the clutch,
wherein the elastic member provides an elastic force in the axial direction to the clutch.

26. The drum rotation device of claim 1, wherein the driving member is provided with a driving cam extending along a circumferential direction of the driving member,
wherein the driving cam comprises:
a first cam portion having a length in the axial direction that increases or decreases along the circumferential direction of the driving member; and
a second cam portion connected to the first cam portion and having an inclination angle smaller than an inclination angle of the first cam portion relative to the circumferential direction of the driving member.

27. The drum rotation device of claim 1, wherein a sensing fence is provided on an edge of the driving member along a circumferential direction of the driving member,
a sensing avoidance portion in which the sensing fence is omitted is formed on the edge of the driving member along the circumferential direction of the driving member, and
during the rotation of the driving member, the sensing fence interferes with a sensing switch to turn the sensing switch on or off, and during the rotation of the driving member, the sensing avoidance portion turns the sensing switch off or on.

28. The drum rotation device of claim 1, wherein the driving member is provided with a driving cam extending along a circumferential direction of the driving member,
a sensing fence is provided on an edge of the driving member along the circumferential direction of the driving member, and
in the driving member, the driving cam and the sensing fence are provided in equal numbers.

29. A drum rotation device comprising:
an output shaft coupled to a drum;
a motor comprising a stator and a rotor configured to rotate relative to the stator, with the motor provided with a coupler coupled to the rotor;
a gear assembly comprising a motor shaft connected to the motor and configured to transmit rotational force of the rotor to the output shaft;
a clutch configured to move in an axial direction of the motor shaft to be connected to the coupler and to control transmission of shifting drive force of the gear assembly to the output shaft; and
a clutch driving device configured to move the clutch in the axial direction,
wherein the clutch driving device comprises:
a driving member having a rotational center concentric with the motor shaft and rotated by a driving source; and
a pusher configured to move in the axial direction in conjunction with the rotation of the driving member, disposed to overlap with the driving member in a radial direction of the driving member, and configured to move the clutch in the axial direction.

30. The drum rotation device of claim 29, wherein the driving member is disposed in the clutch driving device to rotate while the driving member is restricted from moving in the axial direction, and
the pusher is disposed concentrically with the driving member in the clutch driving device so as to move in the axial direction while the pusher is restricted from rotating.

31. The drum rotation device of claim 29, wherein the pusher moves in the axial direction in conjunction with the rotation of the driving member,
wherein the pusher moves the clutch in the axial direction so that the clutch is connected to the coupler.

32. A drum rotation device comprising:
an output shaft coupled to a drum;
a motor comprising a stator and a rotor configured to rotate relative to the stator;
a gear assembly comprising a motor shaft connected to the motor and configured to transmit rotational force of the rotor to the output shaft,
a clutch configured to move in an axial direction of the motor shaft to be connected to the rotor and to control transmission of shifting drive force of the gear assembly to the output shaft;
a driving member having a rotational center concentric with the motor shaft and rotated; and
a pusher configured to move in the axial direction in conjunction with the rotation of the driving member and to move the clutch in the axial direction,
wherein at least one surface of a surface of the driving member and a surface of the pusher facing the driving member is provided with a cam portion that interferes with a counterpart in a circumferential direction.

33. The drum rotation device of claim 32, wherein one surface of the driving member is provided with a driving cam having a length in the axial direction that varies along a circumferential direction of the driving member,
the pusher facing the one surface of the driving member is provided with a driven cam guided by the driving cam, and
when the driving member rotates, the driven cam moves in the axial direction on the driving cam.

34. A laundry treating apparatus comprising:
the drum rotation device of one of claims 1 to 33; and
a drum rotated by the drum rotation device and having a storage space formed therein.
